# NEUE EUROPÄISCHE PATENTSCHRIFT

(11) **EP 3 150 923 B2**
(45) Veröffentlichungstag und Bekanntmachung des Hinweises auf die Entscheidung über den Einspruch: **08.06.2022**
(45) Hinweis auf die Patenterteilung: 06.03.2019
(21) Anmeldenummer: 15188145.5
(22) Anmeldetag: 02.10.2015
(51) Int. Cl.: F16K 1/12, F16K 41/10, F24D 3/10, F24D 19/10, F16K 11/048

(54) **HYDRAULISCHES SYSTEM**
HYDRAULIC SYSTEM
SYSTEME HYDRAULIQUE

(43) Veröffentlichungstag der Anmeldung: 05.04.2017
(73) Patentinhaber: Grundfos Holding A/S, 8850 Bjerringbro (DK)
(72) Erfinder: BLAD, Thomas, 8850 Bjerringbro (DK)
(74) Vertreter: Patentanwälte Vollmann Hemmer Lindfeld Partnerschaft mbB

(56) Entgegenhaltungen:
- EP-A2- 0 568 122
- DE-A1- 1 928 575
- DE-A1- 1 928 575
- DE-B- 1 049 074
- US-A- 2 893 416
- US-A- 3 734 132
- US-A- 3 897 903
- US-A1- 2008 260 540
- US-A1- 2015 014 425

## Beschreibung

Die Erfindung betrifft ein hydraulisches System, welches ein Heizungssystem ist, mit zumindest einem Pumpenaggregat und einer Schalteinrichtung sowie ein Verfahren zum Betrieb eines solchen hydraulischen Systems.

Es sind hydraulische Systeme, beispielsweise Heizungssysteme bekannt, welche Schalteinrichtungen aufweisen, beispielsweise um Strömungswege zu öffnen oder abzusperren oder ähnliches. Dabei ist es bekannt, derartige Schalteinrichtungen beispielsweise mit einem elektrischen Antrieb zum Schalten zwischen zwei Schaltstellungen zu versehen. Derartige Schalteinrichtungen sind vergleichsweise teuer.

Darüber hinaus sind druckabhängige Schalteinrichtungen und durch Veränderung der Strömungsrichtung bzw. der Drehrichtung eines Pumpenaggregates betätigbare Schalteinrichtungen bekannt. Allerdings ist es in hydraulischen Systemen nicht immer möglich, die Strömungsrichtung ohne weiteres zu ändern. Die Drehrichtungsumkehr eines Pumpenaggregates hat in der Regel einen Wirkungsgradverlust zur Folge. Nachteilig ist ferner, dass das Ventil unmittelbar am Pumpenlaufrad angeordnet werden muss.

DE 1 928 575 offenbart eine Heizungsanlage mit einem hydraulisch betätigten Mischventil. Dieses Mischventil wird durch die Strömung oder den Druck im hydraulischen Kreis mit einer Kraft beaufschlagt, welche das Ventilelement mit zunehmendem Druck bzw. zunehmender Strömung in eine bestimmte Richtung verlagert. Bei abnehmendem Druck bzw. abnehmender Strömung verlagert sich das Ventilelement in entgegengesetzter Richtung, gegebenenfalls unterstützt durch eine Federkraft. Dies bedeutet, dass in diesem System für jede Pumpendrehzahl nur eine bestimmte Ventilstellung erreicht werden kann. Mit Veränderung der Drehzahl des Pumpenaggregates verändert sich automatisch die Ventilstellung. D. h., hier ist es nicht möglich, eine Schalteinrichtung unabhängig von der Drehzahl des Pumpenaggregates umzuschalten. DE 1 928 575 offenbart den Oberbegriff des Anspruchs 1.

Entsprechende Systeme sind aus US 3,897,903 sowie DE 1 049 074 bekannt. Auch diese zeigen Ventilelemente, welche druckabhängig, d. h., in Abhängigkeit des in dem hydraulischen System herrschenden Druckes bewegt werden.

Im Hinblick auf diese Problematik ist es Aufgabe der Erfindung, ein hydraulisches System mit einem Pumpenaggregat und einer zwischen zumindest zwei Schaltstellungen umschaltbaren Schalteinrichtungen dahingehend zu verbessern, dass ein kostengünstigerer Aufbau des hydraulischen Systems bei hohem Wirkungsgrad ermöglicht wird.

Diese Aufgabe wird durch ein hydraulisches System mit den in Anspruch 1 angegebenen Merkmalen sowie durch ein Verfahren mit den in Anspruch 19 angegebenen Merkmalen gelöst. Bevorzugte Ausführungsformen ergeben sich aus den jeweiligen Unteransprüchen, der nachfolgenden Beschreibung sowie den beigefügten Figuren. Die nachfolgend beschriebenen Merkmale können in Kombination, jedoch auch unabhängig voneinander verwirklicht werden.

Das erfindungsgemäße hydraulische System weist zumindest ein Pumpenaggregat und eine Schalteinrichtung auf, wobei die Schalteinrichtung zumindest zwei Schaltstellungen aufweist, das heißt zwischen zumindest zwei Schaltstellungen umschaltbar ist. Das hydraulische System ist ein Heizungssystem und vorzugsweise ein System zur Erwärmung von Brauchwasser sein.

Erfindungsgemäß ist vorgesehen, dass die Schalteinrichtung zwischen ihren beiden Schaltstellungen allein durch hydraulische Ansteuerung über das hydraulische System, das heißt über das in dem hydraulischen System übertragene Fluid bzw. die in dem hydraulischen System übertragene Flüssigkeit umgeschaltet wird. So kann auf einen separaten Antrieb für die Schalteinrichtung verzichtet werden. Das Umschalten zwischen den Schalteinrichtungen wird erfindungsgemäß durch entsprechende Ansteuerung des Pumpenaggregates bewirkt, woraufhin das Pumpenaggregat die hydraulischen Kräfte bzw. hydraulischen Zustände im hydraulischen System so verändert, dass die Schalteinrichtung umgeschaltet wird.

Dazu ist die Schalteinrichtung erfindungsgemäß derart ausgebildet, dass sie bei Betrieb des Pumpenaggregates in einem ersten Betriebszustand in jeder der zumindest zwei Schaltstellungen jeweils durch die hydraulischen Kräfte in dem System stabil gehalten wird. Das heißt es handelt sich bei einer Schalteinrichtung mit zwei Schaltstellungen erfindungsgemäß um ein bistabiles System, in welchem jede der beiden Schaltstellungen selbsttätig durch den hydraulischen Druck im hydraulischen System stabil gehalten werden kann, so dass keine externen Haltekräfte, beispielsweise durch einen externen Antrieb erforderlich sind. Dabei ist das hydraulische System erfindungsgemäß so ausgebildet, dass es einen ersten Betriebszustand gibt, in welchem die Schalteinrichtung stabil in ihrer jeweils erreichten Schaltstellung gehalten wird, und zumindest einen zweiten Betriebszustand gibt, in welchem diese Stabilität zumindest vorübergehend aufgehoben ist, um die Schalteinrichtung von der einen Schaltstellung in eine andere, vorzugsweise von der ersten in die zweite Schaltstellung bewegen zu können.

Dazu ist erfindungsgemäß die Schalteinrichtung derart ausgebildet, dass in dem zweiten Betriebszustand des Pumpenaggregates die Schalteinrichtung mit Hilfe von Schaltenergie von einer ersten Schaltstellung in eine zweite Schaltstellung bewegt wird, welche in dem ersten Betriebszustand gespeichert wurde. Das heißt die Schaltenergie, welche erforderlich ist, um die Schalteinrichtung von einer ersten in eine zweite Schaltstellung zu bewegen, wird erfindungsgemäß in dem ersten Betriebszustand gespeichert und dann in dem zweiten Betriebszustand des Pumpenaggregates genutzt, um ein Umschalten der Schalteinrichtung durchzuführen. Die Schaltenergie wird erfindungsgemäß dabei dem hydraulischen System, das heißt der in dem hydraulischen System geförderten Flüssigkeit entnommen, so dass auf einen externen Antrieb verzichtet werden kann. Dabei ist das hydraulische System erfindungsgemäß so ausgebildet, dass die Schaltenergie in dem ersten Betriebszustand unabhängig von einem Umschalten der Schalteinrichtung zwischen den Schalteinrichtungen gespeichert werden kann. Das bedeutet, dass zur Speicherung der Schaltenergie es nicht erforderlich ist, dass die Schalteinrichtung von der einen in die andere Schaltstellung bewegt wird. So kann vorzugsweise die erste Schaltstellung eine Ruhe-bzw. Ausgangslage sein, in welcher sich die Schalteinrichtung bei Stillstand des Pumpenaggregates befindet. Dies ermöglicht es, das Pumpenaggregat ausgehend von diesem Zustand in Betrieb zu nehmen, ohne dass sich die Schalteinrichtung zunächst in die zweite Schaltstellung verlagert. In diesem Betriebszustand wird dann Energie gespeichert, welche später, wenn das Pumpenaggregat in den zweiten Betriebszustand versetzt wird, als Schaltenergie genutzt wird, um die Schalteinrichtung von der ersten Schaltstellung in die zweite Schaltstellung zu bewegen.

Die Schalteinrichtung kann vorzugsweise so ausgebildet sein, dass sie ein Rückstellelement, beispielsweise eine Rückstellfeder aufweist, welche dazu dient, die Schalteinrichtung bei Stillstand des Pumpenaggregates in einer definierten Ausgangslage, beispielsweise einer ersten Schaltstellung, zu halten. Zurück in die erste Schaltstellung schaltet, die Schalteinrichtung somit vorzugsweise beim Abschalten des Pumpenaggregates durch das Rückstellelement.

Der erste und der zweite Betriebszustand, welche vorangehend beschrieben wurden, sind vorzugsweise Betriebszustände, in welchen das Pumpenaggregat dieselbe Drehrichtung aufweist. Das heißt es erfolgt zwischen den Betriebszuständen vorzugsweise keine Drehrichtungsumkehr. Vorzugsweise unterscheiden sich die Betriebszustände durch die Drehzahl des Pumpenaggregates. Bei dem Pumpenaggregat handelt es sich insbesondere um ein Kreiselpumpenaggregat. Insbesondere kann es sich um ein nasslaufendes Kreiselpumpenaggregat handeln. Das Pumpenaggregat weist vorzugsweise zumindest ein Pumpengehäuse mit zumindest einem darin rotierenden Laufrad sowie ein Motorgehäuse bzw. Statorgehäuse mit einem darin angeordneten elektrischen Antriebsmotor, welcher das Laufrad antreibt, auf. Der Antriebsmotor ist vorzugsweise über einen Drehzahlsteller in seiner Drehzahl einstellbar. Ferner weist das Pumpenaggregat bevorzugt eine Steuereinrichtung zur Steuerung bzw. Regelung des Pumpenaggregates auf, insbesondere zum Umschalten zwischen den beiden Schaltstellungen der Schalteinrichtung, indem das Pumpenaggregat in unterschiedliche Betriebszustände versetzt wird. Die Steuereinrichtung kann z.B. in einem separaten Elektronikgehäuse, welches vorzugsweise mit dem Motorgehäuse verbunden ist, angeordnet sein oder aber auch im Motorgehäuse selber untergebracht sein. Auch eine externe Anordnung der Steuereinrichtung ist möglich.

Gemäß einer bevorzugten Ausführungsform der Erfindung weist das hydraulische System zumindest einen Energiespeicher auf, welcher derart ausgestaltet ist, dass er bei Betrieb des Pumpenaggregates in dem ersten Betriebszustand von einem hydraulischen Druck in dem hydraulischen System beaufschlagt ist und in einem Ladevorgang Schaltenergie speichert, wobei die Schalteinrichtung in ihrer eingenommenen Schaltstellung verbleibt. Dass die Schalteinrichtung in ihrer eingenommenen Schaltstellung verbleibt, bedeutet, dass kein Umschalten in eine andere, insbesondere die zweite Schaltstellung erfolgt. Dies schließt jedoch nicht aus, dass sich die Schalteinrichtung bzw. ein Schaltelement in der Schalteinrichtung während des Ladevorganges um ein gewisses Maß verlagert, ohne ein Umschalten zu bewirken. Der Energiespeicher ist ferner bevorzugt mit der Schalteinrichtung in einer Weise kraftübertragend gekoppelt, dass in dem zweiten Betriebszustand des Pumpenaggregates die Schalteinrichtung durch eine von dem Energiespeicher erzeugte Kraft, das heißt eine unter Ausnutzung der Schaltenergie erzeugte Kraft in eine zweite Schaltstellung bewegt wird.

Der Energiespeicher kann vorzugsweise ein Teil der Schalteinrichtung sein. Alternativ oder zusätzlich ist es möglich, dass ein Fluid, insbesondere eine Flüssigkeit in dem hydraulischen System, insbesondere ein in Bewegung befindliches Fluid in dem hydraulischen System als Energiespeicher fungiert. Ein separater Energiespeicher kann beispielsweise als Federspeicher, als magnetischer, hydraulischer und/oder pneumatischer Energiespeicher ausgebildet sein. Ein solcher Speicher wird von dem hydraulischen Druck in dem System beaufschlagt und vorzugsweise wird ein Element des Energiespeichers durch den hydraulischen Druck bewegt, so dass der Energiespeicher geladen wird, insbesondere eine Feder, beispielsweise eine Schraubenfeder oder auch eine Glasfeder gespannt wird.

Wenn das Fluid in dem hydraulischen System selber als Energiespeicher fungiert, werden vorzugsweise Trägheitskräfte bzw. wird eine aus der Trägheit der Flüssigkeit resultierende Strömungsenergie als Schaltenergie genutzt, um ein Umschalten der Schalteinrichtung von einer Schaltstellung in die andere Schaltstellung zu bewegen. Wenn der in dem System erzeugte hydraulische Druck dazu genutzt wird, die Schalteinrichtung in ihrer eingenommenen Schaltstellung zu halten, so kann durch Umschalten des Betriebszustandes des Pumpenaggregates in dem zweiten Betriebszustand beispielsweise der Druck so reduziert werden, dass die Haltefunktion aufgehoben ist. Aufgrund der zirkulierenden Flüssigkeit bzw. des zirkulierenden Fluids besitzt dieses jedoch eine gewisse Trägheit, so dass die Strömungsenergie im System nicht genauso schnell abnimmt wie der zum Halten des Schaltzustandes genutzte Druck. Diese noch verbleibende Strömungsenergie kann dann zum Umschalten von der einen Schaltstellung in die andere Schaltstellung genutzt werden.

Um die auf die Schalteinrichtung bzw. ein Schaltelement der Schalteinrichtung wirkenden Kräfte an das hydraulische System anzupassen, ist es möglich, die Größenverhältnisse der Flächen, auf welche die hydraulischen Kräfte wirken, entsprechend anzupassen. So kann eine Druckfläche, auf welche der hydraulische Druck zum Halten der Schalteinrichtung in ihrer eingenommenen Schaltstellung wirkt, in der Größe so dimensioniert werden, dass bei einem bestimmten hydraulischen Druck eine gewünschte Haltekraft gegeben ist. Die Strömung kann zur Bewegung der Schalteinrichtung bzw. des Schaltelementes auf Prallflächen wirken. Auch diese Prallflächen können in Ihrer Größe so dimensioniert bzw. abgestimmt werden, dass die gewünschten Kräfte, welche zum Bewegen der Schalteinrichtung in die andere Schaltstellung erforderlich sind, erzeugt werden. Insbesondere kann durch Abstimmung der Flächenverhältnisse eine gewünschte Wechselwirkung zwischen Haltekraft und der die Bewegung verursachende Kraft erreicht werden.

Besonders bevorzugt wird das Pumpenaggregat in dem ersten Betriebszustand mit einer Drehzahl oberhalb einer Grenzdrehzahl betrieben und in dem zweiten Betriebszustand mit einer Drehzahl kleiner oder gleich der Grenzdrehzahl betrieben oder das Pumpenaggregat steht in dem zweiten Betriebszustand still. Durch die Verringerung der Drehzahl wird der Druck im hydraulischen System, in der vorangehend beschriebenen Weise reduziert, so dass insbesondere ein Druck, welcher dazu dient, die Schalteinrichtung in ihrer Schaltstellung zu halten soweit reduziert wird und die Schalteinrichtung aus der Schaltstellung in die andere Schaltstellung bewegt werden kann. Vorzugsweise wird das Pumpenaggregat in dem zweiten Betriebszustand nicht ganz abgeschaltet. Dies erleichtert insbesondere bei über Frequenzumrichter angesteuerten Antriebsmotoren die Wiederinbetriebnahme bzw. nachfolgende Drehzahlerhöhung. Darüber hinaus wird so in dem zweiten Betriebszustand weiterhin eine Strömungsenergie in dem System aufrechterhalten, welche den Umschaltvorgang unterstützt. Weiter bevorzugt kann der Druck auf einem Niveau gehalten werden, welcher dazu dient, nach dem Umschalten der Schalteinrichtung in den anderen Betriebszustand, die Schalteinrichtung in diesem zweiten Betriebszustand wieder selbsttätig zu halten, ohne das Pumpenaggregat sofort wieder in den ersten Betriebszustand zu versetzen.

Besonders bevorzugt wird das Pumpenaggregat jedoch nach dem Umschalten bzw. dem Wechsel der Schaltstellungen wieder in den ersten Betriebszustand versetzt, in dem die dann eingenommene Schaltstellung, beispielsweise die zweite Schaltstellung wieder durch den hydraulischen Druck stabil gehalten wird. Dies ist insbesondere dann erforderlich, wenn in dem zweiten Betriebszustand die zweite Schalteinstellung nicht stabil gehalten wird, sondern die Schalteinrichtung bestrebt ist, nach einer bestimmten Zeit selbsttätig wieder in die erste Schaltstellung zurückzuschalten. Für diesen Fall kann eine Steuereinrichtung des Pumpenaggregates derart ausgestaltet sein, das sie nach dem Versetzen des Pumpenaggregates in den zweiten Betriebszustand das Pumpenaggregat zu einem vorbestimmten Zeitpunkt oder nach einer vorbestimmten Zeitspanne wieder in den ersten Betriebszustand versetzt. Dabei ist der Zeitpunkt bzw. die Zeitspanne so gewählt, dass sich die Schalteinrichtung zu diesem Moment noch in der zweiten Schaltstellung befindet, so dass diese dann in dem ersten Betriebszustand des Pumpenaggregates wieder stabil gehalten wird.

Gemäß einer bevorzugten Ausführungsform der Erfindung weist das Pumpenaggregat einen Drehzahlsteller zur Veränderung der Drehzahl des Pumpenaggregates auf, wobei der Drehzahlsteller vorzugsweise eine Bremsschaltung aufweist, welche das Pumpenaggregat bei einer Verringerung der Drehzahl aktiv abbremst. Ein solcher Drehzahlsteller kann in Form einer elektronischen Steuereinrichtung ausgebildet sein. Eine solche elektronische Steuereinrichtung kann insbesondere auch einen Frequenzumrichter zur Ansteuerung eines elektrischen Antriebsmotors des Pumpenaggregates aufweisen. Die Bremsschaltung ermöglicht es, die Drehzahl schneller zu verringern, als es bei einem reinen Auslaufen des Pumpenaggregates der Fall wäre. Dies ermöglicht es, den hydraulischen Druck in dem hydraulischen System besonders schnell zu reduzieren, sodass der hydraulische Druck schneller abfällt als die im System vorhandene Strömungsenergie. So kann die Strömungsenergie in der beschriebenen Weise zum Umschalten der Schalteinrichtung in eine andere Schaltstellung ausgenutzt werden.

Weiter bevorzugt ist der Energiespeicher derart ausgebildet, das bei Betrieb des Pumpenaggregates in dem ersten Betriebszustand ein hydraulischer Druck einer von dem Energiespeicher erzeugten und auf die Schalteinrichtung wirkenden Kraft derart entgegenwirkt, dass ein Schaltvorgang unterbunden wird. Das heißt die in dem ersten Betriebszustand von dem hydraulischen Druck erzeugte und auf die Schalteinrichtung wirkende Kraft ist größer als die von dem Energiespeicher nach dem Ladevorgang erzeugte Kraft bzw. Schaltkraft, welche bestrebt ist, die Schalteinrichtung in die jeweils andere, das heißt beispielsweise die zweite Schaltstellung zu bewegen. So wird das System in dem ersten Betriebszustand in der eingenommenen Schaltstellung stabil gehalten.

Der Energiespeicher weist bevorzugt eine Druckfläche auf, welche mit einem Strömungsweg in dem hydraulischen System derart verbunden ist, dass die Druckfläche mit einem von dem Pumpenaggregat erzeugten Fluiddruck beaufschlagt ist. So wirkt der Fluiddruck in der oben beschriebenen Weise auf den Energiespeicher, um Energie aus dem hydraulischen System auf den Energiespeicher zu übertragen. Dies kann beispielsweise dadurch erfolgen, dass die Druckfläche gegen eine Feder verlagert wird, wie es oben beschrieben wurde.

Gemäß einer bevorzugten Ausführungsform der Erfindung ist der Energiespeicher mit der Schalteinrichtung bzw. einem beweglichen Schaltelement der Schalteinrichtung über ein elastisch verformbares Dämpfungselement verbunden, welches derart ausgestaltet ist, dass es sich während des Ladevorganges des Energiespeichers verformt, ohne die Schalteinrichtung bzw. deren Schaltelement zu bewegen bzw. in die andere Schaltstellung umzuschalten. So kann der Ladevorgang des Energiespeichers erfolgen, ohne dass die Schalteinrichtung sich von einer in die andere Schaltstellung bewegt. Weiter bevorzugt ist das Dämpfungselement derart angeordnet, dass bei Betrieb des Pumpenaggregates in dem ersten Betriebszustand auf das Dämpfungselement ein von dem Pumpenaggregat erzeugter hydraulischer Druck wirkt, welcher einer von dem Energiespeicher erzeugten aus das Dämpfungselement wirkenden Kraft unter elastischer Verformung des Dämpfungselementes entgegenwirkt. Der Energiespeicher kann beispielsweise eine Feder, insbesondere eine Schraubenfeder aufweisen, welche gestaucht oder gedehnt wird und eine Kraft erzeugt, welche der von dem hydraulischen Druck erzeugten Kraft entgegenwirkt, wobei die von dem hydraulischen Druck erzeugte Kraft vorzugsweise so groß ist, dass die Feder im gespannten Zustand gehalten wird. Dabei sind der Energiespeicher und das Dämpfungselement vorzugsweise so angeordnet bzw. miteinander verbunden, dass das Dämpfungselement gleichfalls unter elastischer Verformung gestaucht wird.

Das Dämpfungselement hat vorzugsweise derartige Dämpfungseigenschaften, dass bei einer Reduzierung des hydraulischen Druckes, beispielweise wenn das Pumpenaggregat in den zweiten Betriebszustand versetzt wird, eine Rückverformung des Dämpfungselementes langsamer erfolgt als eine Entladung des Energiespeichers. In dem ersten Betriebszustand wird, wie oben beschrieben, die Schalteinrichtung vorzugsweise durch den hydraulischen Druck stabil in der ersten Schaltstellung gehalten. Durch den hydraulischen Druck wird in diesem Zustand der Energiespeicher geladen, wobei gleichzeitig das Dämpfungselement elastisch verformt, beispielsweise gestaucht wird. Wird nun das Pumpenaggregat in den zweiten Betriebszustand versetzt und der hydraulische Druck dadurch soweit reduziert, dass die auf die Schalteinrichtung wirkende Kraft nicht mehr groß genug ist, um diese in der ersten Schaltstellung gegen die von dem Energiespeicher erzeugte Kraft zu halten, entlädt sich der Energiespeicher, wodurch das Schaltelement bzw. die Schalteinrichtung in die zweite Schaltstellung bewegt wird, da sich das Dämpfungselement nicht so schnell zurückverformt, wie der Energiespeicher sich entlädt. Das heißt durch das Dämpfungselement wird die Entkopplung des Ladevorganges von der Bewegung der Schalteinrichtung erreicht und es besteht dennoch eine Kopplung zur Bewegung der Schalteinrichtung im Entladevorgang des Energiespeichers während des zweiten Betriebszustandes des Pumpenaggregates.

Vorzugsweise kann das Dämpfungselement als ein größenveränderliches Volumen ausgebildet sein, welches über eine Drosselstelle mit einem Fluid füll- und entleerbar ist, wobei vorzugsweise das größenveränderliche Volumen über die Drosselstelle mit einem zweiten größenveränderlichen Ausgleichsvolumen zu einem geschlossenen System verbunden ist. Das geschlossene System hat den Vorteil, dass in die Drosselstelle keine Verunreinigungen eindringen können. Alternativ kann jedoch auch ein offenes System verwendet werden, in welchem das Volumen des Dämpfungselementes über die Drosselstelle mit Flüssigkeit aus dem hydraulischen System gefüllt wird und zurück in das hydraulische System geleert wird. Das Volumen und das Ausgleichsvolumen sind vorzugsweise durch einen Balg, beispielsweise einen Faltenbalg nach außen begrenzt. Alternativ könnte auch eine Kolben-ZylinderAnordnung Verwendung finden, um ein größenveränderliches Volumen bzw. Ausgleichsvolumen bereitzustellen.

Gemäß einer weiteren bevorzugten Ausführungsform der Erfindung ist das Dämpfungselement mit einem Rückstellelement, insbesondere eine Rückstellfeder versehen, welches eine Rückverformung bewirkt. Eine solche Rückstellfeder kann beispielsweise eine Schraubenfeder sein. Ein zusätzliches Rückstellelement ist dann von Vorteil, wenn das Dämpfungselement selber keine ausreichende Elastizität aufweist, um eine selbstständige Rückverformung zu gewährleisten. So kann beispielsweise bei Verwendung eines Balges bzw. Faltenbalges, welcher ein größenveränderliches Volumen definiert, eine Schraubenfeder im Inneren oder außenumfänglich des Balges angeordnet werden, wobei der Balg sich axial in seiner Länge in der Wirkrichtung der Feder verändert, um das Innenvolumen zu vergrößern oder zu verkleinern.

Gemäß einer weiteren bevorzugten Ausführungsform ist eine Steuereinrichtung des Pumpenaggregates derart ausgebildet, dass sie zum Veranlassen eines Schaltvorganges bzw. eines Umschalten der Schalteinrichtung für eine Schaltpause den Betrieb des Pumpenaggregates von dem ersten Betriebszustand in den zweiten Betriebszustand ändert, beispielsweise die Drehzahl auf oder unter die zuvor genannte Grenzdrehzahl ändert, wobei diese Schaltpause kürzer ist als eine Zeitspanne, welche die Rückverformung des Dämpfungselementes in Anspruch nimmt. Diese Ausgestaltung ermöglicht es nach dem Umschalten der Schaltvorrichtung in die zweite Schaltstellung das Pumpenaggregat so wieder in den ersten Betriebszustand zu versetzten, dass in dem hydraulischen System wieder ein ausreichend hoher Druck erzeugt wird, welcher dann die Schalteinrichtung stabil in dem zweiten Schaltzustand hält. Würde dies erst nach Verformung des Dämpfungselementes geschehen, könnte sich die Schalteinrichtung wieder in den ersten Schaltzustand zurückbewegen, bevor wieder ein stabiler Haltezustand der Schalteinrichtung erreicht ist.

Anstatt ein Dämpfungselement zwischen dem Energiespeicher und der Schalteinrichtung anzuordnen, ist es auch möglich, auf andere Weise eine Entkopplung des Ladevorganges des Energiespeichers von einer Bewegung der Schalteinrichtung bzw. eines Schaltelementes zu erreichen und dennoch beim Entladen des Energiespeichers die Bewegung der Schalteinrichtung in die andere Schaltstellung zu gewährleisten. Dies kann beispielsweise auch durch einseitig wirkende mechanische Mitnehmer erfolgen. Gemäß einer weiteren bevorzugten Ausführungsform ist es beispielsweise möglich, einen Druckkörper mit einer Druckfläche mit einem Energiespeicher so zu koppeln, dass durch Bewegung des Druckkörpers der Energiespeicher, beispielsweise eine Schraubenfeder gespannt bzw. geladen wird. Dabei kann sich der Druckkörper relativ zu dem zu bewegenden Schaltelement bzw. zu bewegenden Element der Schalteinrichtung, beispielsweise einem Ventilelement bewegen, so dass die Schalteinrichtung bzw. deren Schaltelement zunächst nicht bewegt wird. Es können dann beispielsweise Haltelemente an dem beweglichen Schaltelement vorgesehen sein, welche nach einem bestimmten zurückgelegten Weg, nach welchem der Energiespeicher geladen ist, den Druckkörper fixieren. Die Halteelemente können beispielsweise Rasthaken sein. Wird nun das Pumpenaggregat in den zweiten Betriebszustand versetzt und die durch den hydraulischen Druck erzeugte Kraft reduziert, kann der Energiespeicher sich entladen und so den Druckkörper bewegen. Wenn dieser in diesem Zustand an dem zu bewegenden Schaltelement gehalten ist, wird dieses gemeinsam mit dem Druckkörper bewegt. In der Schalteinrichtung können Lösemittel so angeordnet sein, dass sie erst nach einem bestimmten, von dem Schaltelement zurückgelegten Weg die Haltemittel derart lösen, dass der Druckkörper wieder freigegeben wird. Dann kann dieser sich wieder frei zu dem Schaltelement bewegen und in einem nächsten Ladevorgang kann der Energiespeicher wieder unabhängig von der Bewegung des Schaltelementes geladen werden, da sich zunächst nur der Druckkörper durch den auf ihn wirkenden hydraulischen Druck bewegt. Erst nach dem Laden des Energiespeichers tritt der Drucckörper dann über die Haltemittel in eine feste Verbindung mit dem zu bewegenden Schaltelement, beispielsweise einem Ventilelement, so dass dieses dann bei dem Umschaltvorgang durch die Entladung des Energiespeichers gemeinsam mit dem Druckkörper bewegt wird.

Die Schalteinrichtung ist vorzugsweise als Umschalteinrichtung und insbesondere als Umschalteinrichtung zum Umschalten eines Strömungsweges zwischen zumindest zwei Zweigen des hydraulischen Systems ausgebildet. Gemäß einer weiteren bevorzugten Ausführungsform ist die Schalteinrichtung vorzugsweise als Ventil, insbesondere als Umschaltventil ausgebildet, welches den Strömungsweg zwischen zwei Zweigen des hydraulischen Systems umschalten kann. In einer solchen als Ventil ausgebildeten Schalteinrichtung wird zumindest ein Ventilelement als Schaltelement zwischen den beiden Schaltstellungen bewegt.

Eine solche Umschalteinrichtung bzw. ein solches Umschaltventil kann beispielsweise in einer Heizungsanlage verwendet werden, in welcher der Strömungsweg für das erwärmte Heizmedium, beispielsweise Wasser, zwischen einem Heizkreislauf durch ein Gebäude und einem Kreislauf durch einen Wärmetauscher zum Erwärmen von Brauchwasser umgeschaltet werden soll. Solche hydraulischen Systeme finden beispielsweise in Kompaktheizungsanlagen bzw. Heizkesseln Verwendung, welche sowohl zum Beheizen eines Gebäudes als auch zum Erzeugen von erwärmten Brauchwasser dienen. In einem solchen System kann die erfindungsgemäße Schalteinrichtung beispielsweise ein motorisch angetriebenes Umschaltventil ersetzen.

Wenn das erfindungsgemäße hydraulische System ein Heizungssystem ist, wie es vorangehend beschrieben ist, ist es vorteilhaft, wenn in einer ersten Schaltstellung der Schalteinrichtung, welche einer Ruhelage bei Inbetriebnahme des Systems entspricht, der Kreislauf durch den Wärmetauscher zum Erwärmen von Brauchwasser geöffnet ist. Dieser Kreislauf ist ein definierter vorbekannter Kreislauf, da er in der Regel im Heizkessel selber herstellerseitig ausgebildet ist. So kann diesem Heizkreislauf sicher die erforderliche Energie zum Umschalten entnommen werden und in der beschriebenen Weise in einem Energiespeicher oder im hydraulischen System, beispielsweise in Form kinetischer Energie des strömenden Fluids, gespeichert werden. Die zweite Schaltstellung ist dann bevorzugt eine Schaltstellung, in welcher der Heizkreislauf durch ein Gebäude geöffnet ist. Dieser Heizkreislauf und insbesondere der aktuelle Zustand eines solchen Heizkreislaufes sind in der Regel nicht bekannt, da der Heizkreislauf eine Vielzahl von Heizkörpern mit Ventilen aufweisen kann, deren Öffnungsgrad sich ständig verändert.

Vorzugsweise ist das hydraulische System ein Kreislaufsystem und das Pumpenaggregat ist ein Umwälzpumpenaggregat, welches eine Flüssigkeit in dem Kreislaufsystem umwälzt. Wie vorangehend beschrieben, kann dies beispielsweise ein Kreislauf eines Heizungssystems sein. Alternativ könnte dies beispielsweise auch ein Kreislauf eines Kühlsystems oder eines anderen hydraulischen Systems, wie es oben genannt wurde, sein.

Vorzugsweise ist in dem hydraulischen System eine Steuereinrichtung vorhanden, welche zum Ändern der Betriebsart des Pumpenaggregates zwischen dem ersten und dem zweiten Betriebszustand ausgebildet ist, um einen Schaltvorgang der Schalteinrichtung zu veranlassen. Die Steuereinrichtung kann insbesondere eine Drehzahländerung des Pumpenaggregates bewirken. Dazu kann der Antriebsmotor des Pumpenaggregates beispielsweise über einen Frequenzumrichter angesteuert sein. Eine solche Ansteuerung ermöglicht es ferner, den Motor bei einer Drehzahlreduzierung aktiv zu bremsen.

Gemäß einer besonders bevorzugten Ausführungsform der Erfindung ist die Schalteinrichtung als ein Umschaltventil mit zwei Ventilsitzen ausgebildet und weist zwei zugehörige miteinander verbundene Ventilkörper auf, welche ein bewegliches Schaltelement bilden und so angeordnet sind, dass, wenn ein Ventilkörper an seinem zugehörigen Ventilsitz dichtend anliegt, gleichzeitig der andere Ventilkörper von seinem zugehörigen Ventilsitz beabstandet ist und umgekehrt. Vorzugsweise ist ein solches Umschaltventil in dem hydraulischen System so angeordnet, dass auf denjenigen Ventilkörper, welcher an seinem zugehörigen Ventilsitz anliegt, bei Betrieb des Pumpenaggregates in dem ersten Betriebszustand ein hydraulischer Druck derart wirkt, dass der Ventilkörper an dem Ventilsitz in Anlage gehalten wird. Dieser hydraulische Druck kann beispielsweise von der Ausgangsseite des Pumpenaggregates durch einen geschlossenen Zweig des hydraulischen Systems auf den Ventilkörper übertragen werden. Dieser Zweig wird dabei vorzugsweise durch den Ventilkörper selber verschlossen. Das heißt, vorzugsweise ist der Ventilkörper zu dem Ventilsitz so angeordnet, dass ein ausgangsseitiger Druck des Umwälzpumpenaggregates so auf den Ventilkörper wirkt, dass dieser gegen den Ventilsitz gedrückt wird. In dem zweiten Betriebszustand wird dieser Druck soweit reduziert, dass der Ventilkörper durch eine Schaltkraft, welche der beschriebenen Haltekraft, welche von dem Druck in dem hydraulischen System erzeugt wird, entgegenwirkt, in seine zweite Schaltstellung bewegt werden kann, das heißt von dem Ventilsitz außer Anlage treten kann, wobei gleichzeitig der zweite Ventilkörper bzw. das zweite Ventilelement mit seinem zugehörigen Ventilsitz in dichtende Anlage gebracht wird. Eine solche Schaltkraft kann beispielsweise von dem vorangehend beschriebenen Energiespeicher oder von einer Trägheitskraft des im System strömenden Fluids erzeugt werden.

Besonders bevorzugt ist die beschriebene Schalteinrichtung in ein Pumpengehäuse des Pumpenaggregates integriert. Dabei ist die Schalteinrichtung bevorzugt in einem Schalteinrichtungsgehäuse angeordnet, welches einteilig bzw. einstückig mit dem Pumpengehäuse, in welchem das Laufrad des Pumpenaggregates rotiert, ausgebildet ist. So wird ein sehr kompakter und einfacher Aufbau erreicht. Besonders bevorzugt ist in das Pumpenaggregat darüber hinaus die vorangehend beschriebene Steuereinrichtung integriert, welche das Umschalten der Schalteinrichtung durch Veränderung der Betriebszustände realisiert. Eine solche Einheit aus Schalteinrichtung und Pumpenaggregat kann dann in ein hydraulisches System beispielsweise in eine Heizungsanlage integriert werden. Gegenstand der Erfindung ist somit auch ein Pumpenaggregat mit einer in das Pumpengehäuse des Pumpenaggregates integrierten Schalteinrichtung, welche in der vorangehend beschriebenen Weise ausgebildet ist bzw. so ausgebildet ist, dass sie mit einem mit dem Pumpenaggregat verbundenen hydraulischen System in der vorangehend beschriebenen Weise zusammenwirkt. Das heißt Gegenstand der Erfindung ist nicht nur das hydraulische System als Ganzes, sondern auch eine Kombination von Pumpenaggregat und Schalteinrichtung, welche vorzugsweise in der vorangehend beschriebenen Weise als eine integrierte Baueinheit ausgebildet sind. Dabei sind Pumpenaggregat und Schalteinrichtung so ausgebildet, dass sie bei Anschluss an ein hydraulisches System, wie eine Heizungsanlage, in der vorangehend beschriebenen Weise wirken können.

Gegenstand der Erfindung ist darüber hinaus auch ein Verfahren zum Betrieb eines hydraulischen Systems, wobei das hydraulische System ein Pumpenaggregat und eine Schalteinrichtung mit zumindest zwei Schaltstellungen aufweist. Das heißt die Schalteinrichtung weist beispielsweise ein bewegliches Schaltelement, beispielsweise ein Ventilelement auf, welches zwischen zwei Schaltstellungen bewegt werden kann. Erfindungsgemäß wird die Schalteinrichtung in einem ersten Betriebszustand des Pumpenaggregates in jeder der möglichen Schaltstellungen jeweils durch die hydraulischen Kräfte in dem System stabil gehalten. Ferner wird zum Umschalten der Schalteinrichtung von einer ersten in eine zweite Schaltstellung oder gegebenenfalls eine weitere Schaltstellung das Pumpenaggregat in einen zweiten Betriebszustand versetzt, in welchem ein Umschalten der Schalteinrichtung in die jeweils andere Schaltstellung mit Hilfe von Schaltenergie erfolgt, welche zuvor in einem Energiespeicher und/oder dem hydraulischen System selber gespeichert wurde, als das Pumpenaggregat in dem ersten Betriebszustand betrieben wurde. So kann die Schalteinrichtung umgeschaltet werden, ohne dass ein externer Antrieb erforderlich ist. Vielmehr wird zum Umschalten Energie genutzt, welche dem hydraulischen System selbst entnommen wurde. Bezüglich weiterer Details des Verfahrensablaufes wird auf die vorangehende Beschreibung des hydraulischen Systems verwiesen. Es ist zu verstehen, dass die anhand des hydraulischen Systems beschriebenen Verfahrensabläufe ebenfalls bevorzugte Merkmale des erfindungsgemäßen Verfahrens darstellen.

Bevorzugt wird eine hydraulische Trägheitskraft des in dem System strömenden Fluids zum Umschalten der Umschalteinrichtung genutzt. Das heißt als Energiespeicher fungiert das strömende Fluid selber und es wird die Energie des strömenden Fluids zum Umschalten genutzt. Dabei ist diese Strömungsenergie nach dem Versetzen des Pumpenaggregates in den zweiten Betriebszustand aufgrund der Trägheit des Fluids noch für einen gewissen Zeitraum verfügbar, in welchem das Umschalten erfolgt.

Die Speicherung der Energie bzw. der Schaltenergie in dem ersten Betriebszustand erfolgt erfindungsgemäß unabhängig von einem Umschalten der Schalteinrichtung. Dabei kann das Speichern der Energie alternativ oder zusätzlich in einem separaten Energiespeicher erfolgen. Das unabhängige Speichern hat den Vorteil, dass, wie oben beschrieben, die Schaltenergie gespeichert werden kann, ohne bei Inbetriebnahme des Systems die Schalteinrichtung aus ihrer Ruhelage, welche eine erste Schaltstellung darstellt, in die zweite Schaltstellung verlagern zu müssen.

Nachfolgend wir die Erfindung beispielhaft anhand der beigefügten Figuren beschrieben. In diesen zeigt:
Fig. 1 schematisch ein erstes Beispiel für ein erfindungsgemäßes hydraulisches System, wobei das hydraulische System in einem Ruhezustand ist,
Fig. 2 das hydraulische System gemäß Fig. 1 in einer ersten Schaltstellung der Schalteinrichtung,
Fig. 3 das hydraulische System gemäß Fig. 1 und 2 in einer zweiten Schaltstellung der Schalteinrichtung,
Fig. 4 das hydraulische System gemäß Fig. 3 in der zweiten Schaltstellung im weiteren Betrieb,
Fig. 5 eine Explosionsansicht einer Schalteinrichtung für ein erfindungsgemäßes hydraulisches System gemäß einer ersten Ausführungsform,
Fig. 6 eine Schnittansicht der Schalteinrichtung gemäß Fig. 5 in einem Ruhezustand,
Fig. 7 eine Schnittansicht gemäß Fig. 6, in welcher sich die Schalteinrichtung in einer ersten Schaltstellung befindet,
Fig. 8 eine Schnittansicht gemäß Fig. 6 und 7, wobei sich die Schalteinrichtung in einer zweiten Schaltstellung befindet,
Fig. 9 eine Schnittansicht einer Schalteinrichtung gemäß einer zweiten Ausführungsform der Erfindung,
Fig. 10 einen Schnitt durch die Schalteinrichtung sowie ein angrenzendes Pumpenaggregat entlang der Linien X-X in Fig. 9,
Fig. 11 eine Schnittansicht einer Schalteinrichtung gemäß einer dritten Ausführungsform, wobei sich die Schalteinrichtung in einer Ruhelage befindet,
Fig. 12 eine Schnittansicht entsprechend Fig. 11, wobei sich die Schalteinrichtung in einer ersten Schaltstellung befindet,
Fig. 13 eine Schnittansicht entsprechend Fig. 11 und 12, wobei sich die Schalteinrichtung in einer zweiten Schaltstellung befindet,
Fig. 14 eine Schnittansicht einer Schalteinrichtung gemäß einer vierten Ausführungsform, wobei sich die Schalteinrichtung in einer Ruhelage befindet,
Fig. 15 eine Schnittansicht entsprechend Fig. 14, wobei sich die Schalteinrichtung in einer zweiten Schaltstellung befindet,
Fig. 16 eine Schnittansicht einer Schalteinrichtung gemäß einer sechsten Ausführungsform, wobei sich die Schalteinrichtung in einer Ruhelage befindet,
Fig. 17 eine Schnittansicht entsprechend Fig. 16, wobei sich die Schalteinrichtung in ihrer zweiten Schaltstellung befindet,
Fig. 18 eine Schnittansicht einer Schalteinrichtung gemäß einer siebten Ausführungsform, wobei sich die Schalteinrichtung in einer ersten Schaltstellung befindet, und
Fig. 19 eine Schnittansicht entsprechend Fig. 18, wobei sich die Schalteinrichtung in ihrer zweiten Schaltstellung befindet.

Nachfolgend wird die Erfindung beispielhaft anhand eines hydraulischen Systems, welches ein Heizungssystem darstellt, beschrieben.

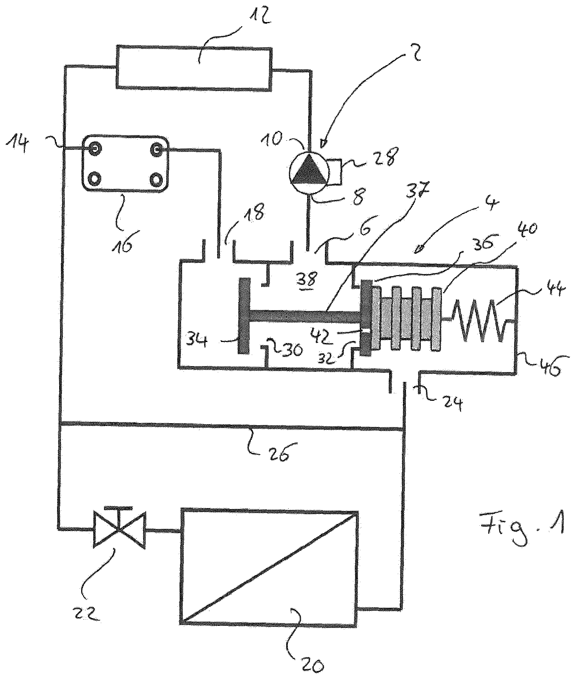

Fig. 1 zeigt ein Ausführungsbeispiel eines erfindungsgemäßen hydraulischen Systems, wie es in einer Heizungs- insbesondere Kompaktheizungsanlage zum Einsatz kommt. Das hydraulische System weist als wesentliche Komponenten ein als Umwälzpumpenaggregat ausgebildetes Pumpenaggregat 2 sowie eine als Umschaltventil wirkende Schalteinrichtung 4 auf. Der Ausgang 6 der Schalteinrichtung 4 ist in diesem Beispiel hydraulisch mit dem saugseitigen Anschluss 8 des Pumpenaggregates 2 verbunden. Die Schalteinrichtung 4 liegt in diesem Ausführungsbeispiel somit an der Saugseite des Pumpenaggregates 2, dies bedeutet, dass die Druckdifferenz zwischen dem druckseitigen Anschluss 10 bzw. der Ausgangsseite 10 des Pumpenaggregates 2 und der Schalteinrichtung 4 größer ist, als zwischen der Schalteinrichtung 4 und dem saugseitigen Anschluss 8. Ausgangsseitig schließt sich in diesem Ausführungsbeispiel an das Pumpenaggregat 2 im Strömungsweg ein Primärwärmetauscher 12 an. Der Primärwärmetauscher 12 ist beispielsweise der Wärmetauscher in einem Heizkessel, in welchem das Heizwasser durch einen Gas-, Öl- oder Pelletbrenner erwärmt wird. In dem Primärwärmetauscher 12 kann das Heizwasser jedoch auch auf andere Weise erwärmt werden, beispielsweise durch eine Solaranlage, Wärmepumpe oder ähnliches. Darüber hinaus ist zu verstehen, dass das System in entsprechender Weise auch als Kühlsystem arbeiten könnte, wobei der Primärwärmetauscher 12 nicht zum Erwärmen sondern zum Kühlen dienen würde.

Stromabwärts des Primärwärmetauschers 12 schließt sich ein Abzweig- bzw. Knotenpunkt 14 an, an welchem der Strömungsweg verzweigt. Ausgehend von dem Knotenpunkt 14 verläuft ein erster Zweig des hydraulischen Systems durch einen Sekundärwärmetauscher 16, in welchem beispielsweise zu erwärmendes Brauchwasser erwärmt wird. Ausgangsseitig des Sekundärwärmetauschers 16 mündet dieser Zweig des hydraulischen Kreislaufes in einen ersten Eingang 18 der Schalteinrichtung 4. Ein zweiter Zweig, welcher sich ausgehend von dem Knotenpunkt 14 erstreckt, bildet einen Heizkreislauf, welcher beispielsweise zur Erwärmung eines Gebäudes dient. Dieser Heizkreislauf wird hier schematisch durch einen Heizkörper 20 mit einem an diesem angeordneten Regulierventil 22 dargestellt. Das Regulierventil 22 kann beispielsweise ein übliches Thermostatventil sein. Ausgangsseitig mündet dieser Heizkreislauf in einen zweiten Eingang 24 der Schalteinrichtung 4. Es ist zu verstehen, dass tatsächlich ein solcher Heizkreis mehr als einen Heizkörper 20 aufweisen kann, welche parallel und/oder in Reihe geschaltet sind. In diesem Beispiel weist der Heizkreis noch einen Bypass 26 auf, welcher dazu dient, eine Strömung durch den Heizkreis zu ermöglichen, wenn das Regulierventil 22 bzw. alle Regulierventile 22 in dem Heizkreis geschlossen sind.

Erfindungswesentlich ist die spezielle Ausgestaltung der Schalteinrichtung 4, welche so ausgestaltet ist, dass auf einen separaten Antrieb für die Schalteinrichtung 4 verzichtet werden kann und diese vielmehr allein über die Umwälzpumpe 2 durch Änderungen des Betriebszustandes des Pumpenaggregates 2 umgeschaltet werden kann. Dies erfolgt durch eine Steuereinrichtung 28 des Pumpenaggregates 2. In diesem Beispiel ist die Steuereinrichtung 28 direkt in das Pumpenaggregat 2 integriert, beispielsweise direkt am oder im Motorgehäuse des Pumpenaggregates 2 angeordnet. Bei dem Pumpenaggregat 2 handelt es sich vorzugsweise um ein in der Drehzahl regelbares, über einen Frequenzumrichter angesteuertes Umwälzpumpenaggregat. Dieses ist insbesondere als Kreiselpumpenaggregat, bevorzugt mit einem nasslaufenden elektrischen Antriebsmotor ausgebildet.

Die Schalteinrichtung 4 dient dazu, zwischen den zwei beschriebenen Strömungswegen, das heißt einmal durch den Sekundärwärmetauscher 16 und einmal durch die Heizkörper 20 des Heizkreises umzuschalten. Dazu weist die Schalteinrichtung zwei Ventilsitze 30 und 32 auf, welchen jeweils ein Ventilelement 34 bzw. 36 (Schaltelement 34 bzw. 36) zugeordnet ist. Die Ventilelemente 34, 36 sind fest miteinander verbunden und so angeordnet, dass sie wechselseitig mit dem jeweils zugehörigen Ventilsitz 30, 32 in dichtende Anlage kommen können. Das heißt, wenn, wie in dem in Fig. 1 gezeigten Zustand das Ventilelement 36 dicht an dem Ventilsitz 32 anliegt, ist das Ventilelement 34 von seinem Ventilsitz 30 beabstandet, sodass der Strömungsweg durch den Ventilsitz 30 geöffnet ist. Die Ventilsitze 30, 32 münden in einen Anschlussraum 38, welcher mit dem Ausgang 6 in hydraulischer Verbindung steht. In diesem Beispiel sind die Ventilsitze 30, 32 einander und dem Anschlussraum 38 abgewandt. Das Ventilelement 34 ist dem Anschluss 18 zugewandt, sodass es aus dem ersten Eingang 18 angeströmt und mit Druck beaufschlagt wird. Das Ventilelement 36 ist dem zweiten Eingang 24 zugewandt und wird so durch den zweiten Eingang 24 angeströmt und mit Druck beaufschlagt. Diese Anordnung der Ventilelemente 34, 36 bewirkt, dass der an den Eingängen 18 und 24 herrschende Druck jeweils so auf die Ventilelemente 34, 36 wirkt, dass diese jeweils gegen ihren zugehörigen Ventilsitz 30, 32 gedrückt werden. Dadurch wird eine Selbsthaltefunktion der Schalteinrichtung 4 erreicht, wie sie nachfolgend beschrieben werden wird.

Dem Ventilsitz 32 abgewandt, ist an dem Ventilelement 36 darüber hinaus ein elastischer Faltenbalg 40 angeordnet, dessen geschlossener Innenraum über ein Durchgangsloch 42 in dem Ventilelement 36 mit dem Anschlussraum 38 in Verbindung steht. Das Durchgangsloch 42 ist als Drosselstelle ausgelegt. An dem dem Ventilelement 36 abgewandten Ende des Faltenbalges 40 greift eine als Zugfeder ausgebildete Feder 44 an, welche mit ihrem anderen Ende am Gehäuse 46 der Schalteinrichtung 4 befestigt ist.

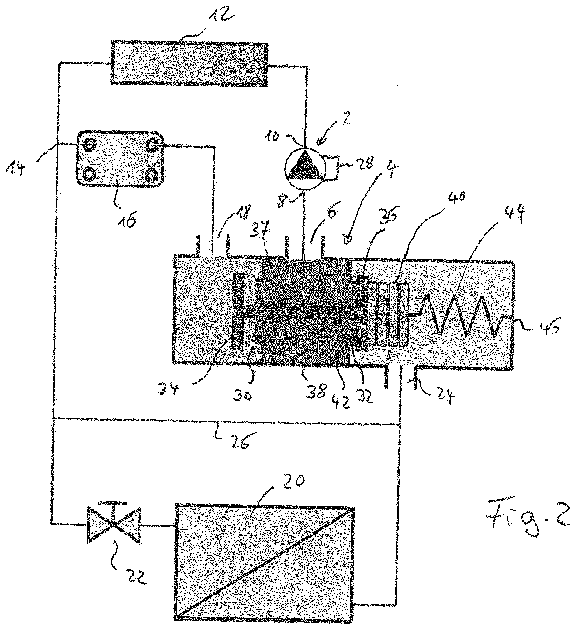

Fig. 1 zeigt die erste Schaltstellung der Schalteinrichtung 4 bzw. der Schaltelemente (Ventilelemente 34 und 36). In dieser ist der Ventilsitz 32 durch das Ventilelement 36 verschlossen und somit der Strömungsweg durch den Heizkreis verschlossen. Wenn das Pumpenaggregat 2 fördert, fördert es somit Flüssigkeit, das heißt insbesondere Wasser, im Kreislauf durch den Primärwärmetauscher 12 und den Sekundärwärmetauscher 16. Dadurch, dass das Ventil an dem Ventilsitz 32 geschlossen ist, überträgt sich der Druck von dem Knotenpunkt 14 durch den geschlossenen Heizkreis 20 und gegebenenfalls durch den Bypass 26 zu dem zweiten Eingang 24 der Schalteinrichtung 4. Dort wirkt dieser Druck gegen die Stirnseite des Faltenbalges 40. Gleichzeitig wirkt über das Durchgangsloch 32 im Inneren des Faltenbalges der in dem Anschlussraum 38 herrschende Druck. Dieser entspricht im Wesentlichen dem Druck am saugseitigen Anschluss 8 des Pumpenaggregates 2. So besteht an der Stirnseite des Faltenbalges 40 eine Druckdifferenz, welche bei Betrieb des Pumpenaggregates 2 in diesem Zustand dazu führt, dass der Faltenbalg 40 gestaucht und die Zugfeder 44 gelängt wird, wie es in Fig. 2 gezeigt ist. Dies ist der Zustand, welcher der Brauchwassererwärmung dient, in welchem das Heizmedium durch den Sekundärwärmetauscher 16 gefördert wird. Solange der am zweiten Eingang 24 herrschende Druck größer als die Kraft der Feder 44 ist, wird dieser Zustand selbsttätig gehalten. Dies ist solange der Fall, wie sich das Pumpenaggregat 2 in einem ersten Betriebszustand befindet, in welchem die Drehzahl über einer vorbestimmten Grenzdrehzahl liegt. Die vorbestimmte Grenzdrehzahl ist in der Steuereinrichtung 28 hinterlegt und so eingestellt, dass der Druck am zweiten Eingang 24 so hoch ist, dass die auf den Faltenbalg 40 und das Ventilelement 36 wirkende, von diesem Druck erzeugte Kraft größer ist als die von der Feder 44 aufgebrachte Zugkraft.

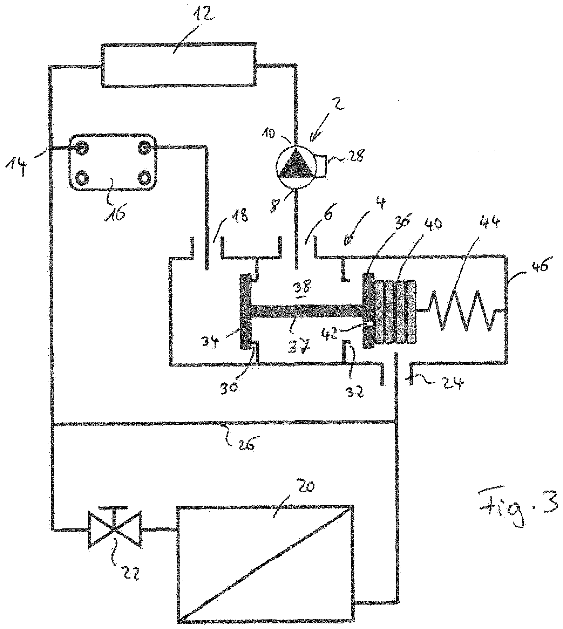

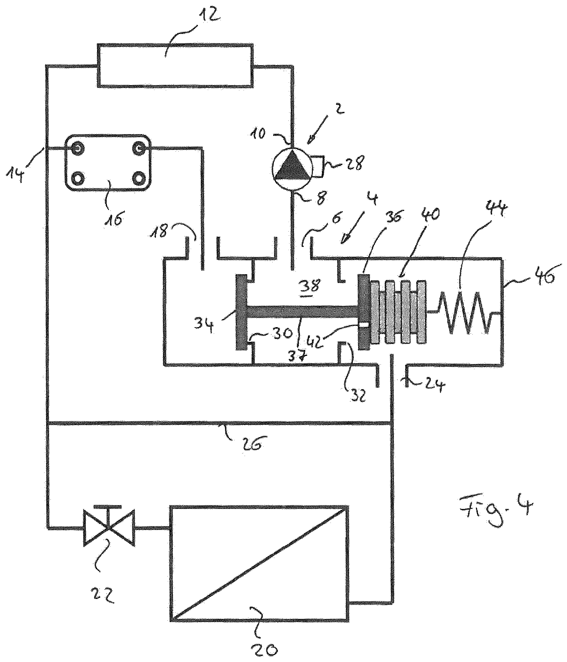

Um das Ventil bzw. die Schalteinrichtung 4 in seine zweite Schaltstellung zu bewegen, in welcher der Ventilsitz 30 geschlossen und der zweite Ventilsitz 32 geöffnet ist, wird das Pumpenaggregat 2 von der Steuereinrichtung 28 in einen zweiten Betriebszustand gebracht, in welchem die Drehzahl unterhalb der vorbestimmten Grenzdrehzahl liegt. In diesem Zustand fällt der Druck an dem zweiten Eingang 24 so weit ab, dass die von dem Druck an dem Faltenbalg 40 zum Ventilsitz 32 hin gerichtete Kraft geringer wird als die von der Feder 44 aufgebrachte Zugkraft. Dies führt dazu, dass sich die Feder 44, wie in Fig. 3 gezeigt, zusammenzieht und den Faltenbalg 40 mit dem daran befestigten Ventilelement 36 von dem Ventilsitz 32 abhebt. Aufgrund der Kopplung der Ventilelemente 36 und 34 wird dabei gleichzeitig das Ventilelement 34 an dem Ventilsitz 30 zur dichtenden Anlage gebracht. Bei dieser Bewegung entspannt sich der Faltenbalg 40 nicht unmittelbar, da sein Innenraum nur über das als Drossel wirkende Durchgangsloch 42 befüllt werden kann. So wird der Faltenbalg 40 zunächst im im Wesentlichen zusammengedrückten Zustand mitbewegt. Erst später entfaltet sich der Faltenbalg 40 wieder langsam in einen Zustand, wie er in Fig. 4 gezeigt ist. Wenn vor diesem Entfalten des Faltenbalges 40 das Pumpenaggregat 2 von dessen Steuereinrichtung 28 wieder in den ersten Betriebszustand versetzt wird, erhöht sich die Drehzahl des Pumpenaggregates 2 wieder und es erhöht sich damit wieder der Druck an dem Knotenpunkt 14, welcher sich nun über den Sekundärwärmetauscher 16 zu dem ersten Eingang 18 und damit auf die Oberfläche des Ventilelementes 34 überträgt. So wirkt auf das Ventilelement 34 eine Kraft, welche dieses gegen den Ventilsitz 30 gedrückt in dem geschlossenen Zustand hält. Somit wird wieder ein stabiler Zustand erreicht. Die Schalteinrichtung 4 ist somit derart bistabil ausgebildet, dass sie in jeder der zwei beschriebenen Schaltstellungen bei Betrieb des Pumpenaggregates 2 mit ausreichend hoher Drehzahl selbsttätig gehalten wird. Ein externer Antrieb oder eine externe Haltekraft ist dazu nicht erforderlich.

Ferner erfolgt das beschriebene Umschalten ebenfalls ohne externen Antrieb, sondern allein über eine hydraulische Kopplung des Pumpenaggregates 2 mit der Schalteinrichtung 4 über das hydraulische System selber. Die Feder 44 dient als Energiespeicher, welcher beim Betrieb in dem ersten Betriebszustand Energie aufnimmt und dann beim Umschalten in den zweiten Betriebszustand durch Entspannung wieder abgibt. So wird eine Kraft zur Bewegung des Ventilelementes von der Feder 44 erzeugt. Die dazu erforderliche Energie bzw. Schaltenergie nimmt die Feder 44 zuvor aus dem hydraulischen System in dem ersten Betriebszustand auf.

Der Faltenbalg 40 mit dem als Drossel wirkenden Durchgangsloch 42 dient einer Entkopplung der Feder 44 von den Ventilelementen 34 und 36 während des Ladevorganges, bei welchem die Feder 44 Energie aufnimmt. Der Faltenbalg 40 ermöglicht es nämlich, dass die Feder 44 in dem ersten Betriebszustand gedehnt wird, ohne dass sich die Ventilelemente 34 und 36 bewegen müssen. Die Ventilelemente 34 und 36 verbleiben vielmehr in der in Fig. 1 und 2 gezeigten Ausgangslage. Aufgrund der von dem Durchgangsloch 42 gebildeten Drosselstelle besteht jedoch zwischen der Feder 44 und dem Ventilelement 36 beim Umschalten in den zweiten Betriebszustand mit geringerer Drehzahl im Wesentlichen eine unmittelbare Kopplung zwischen der Feder 44 und dem Ventilelement 36, sodass letzteres von der Feder 44 direkt bewegt wird. Wesentlich ist es, dass die Steuereinrichtung 28 das Pumpenaggregat 2 von dem zweiten Betriebszustand 2 ausreichend schnell wieder in den ersten Betriebszustand 1 schaltet, bevor der Faltenbalg 40 sich vollständig entfalten kann, sodass die Schalteinrichtung bzw. das Ventilelement 34 dann wieder durch den hydraulischen Druck in der in Fig. 4 gezeigten zweiten Schaltstellung gehalten wird. Wenn in dieser zweiten Schaltstellung das Pumpenaggregat 2 dann abgeschaltet wird, fällt der auf das Ventilelement 34 wirkende hydraulische Druck weg, sodass auf das Ventilelement 34 und das Ventilelement 36 keine Drucckraft gegen den Faltenbalg 40 mehr wirkt. Dies bewirkt, dass der Faltenbalg 40 sich aufgrund seiner Elastizität dann weiter in den in Fig. 1 gezeigten Zustand entfalten kann. Wenn in diesem Zustand die Feder 44 vollständig gestaucht ist, drückt so der Faltenbalg 40, welcher dann als Feder wirkt, die Ventilelemente 34 und 36 wieder zurück in ihre Ausgangslage, das heißt die erste Schaltstellung, wie sie in Fig. 1 gezeigt ist. Aus dieser ersten Schaltstellung kann das System dann wieder durch Inbetriebnahme des Pumpenaggregates 2 in Betrieb genommen werden. Zusätzlich zu der Elastizität des Federbalges 40 könnte eine weitere Druckfeder im Inneren oder außerhalb des Faltenbalges 40 als Rückstellelement vorgesehen sein.

Wesentlich für das System ist, dass die zwei Betriebszustände lediglich unterschiedliche Drehzahlen und damit unterschiedliche Ausgangsdrücke des Umwälzpumpenaggregates 2 bedingen, nicht jedoch eine Drehrichtungsumkehr des Pumpenaggregates 2. Dies kommt dem Wirkungsgrad zugute. Ferner ist es so nicht erforderlich, zum Umschalten der beiden Betriebszustände das Pumpenaggregat 2 vollständig auszuschalten. Es ist jedoch auch möglich, dass der zweite Betriebszustand nicht nur eine verringerte Drehzahl aufweist, sondern dass das Pumpenaggregat 2 im zweiten Betriebszustand vollständig angehalten wird. Auch dann muss es nur schnell genug wieder in Betrieb genommen werden, um eine Rückbewegung der Ventilelemente 34 durch Expansion des Faltenbalges 40 oder gegebenenfalls einer zusätzlichen Feder zu verhindern.

Die hier beschriebene Schalteinrichtung 4, wie auch die nachfolgend beschriebenen Ausführungsbeispiele von Schalteinrichtungen sind dafür vorgesehen, in der beschriebenen Weise an der Saugseite des Pumpenaggregates 2 angeordnet zu werden. Es ist jedoch zu verstehen, dass eine entsprechend ausgebildete Schalteinrichtung auch an der Druckseite des Pumpenaggregates 2 Verwendung finden könnte. Bei der in Fig. 1 bis 4 gezeigten Schalteinrichtung müssten dann lediglich die Ventilelemente 34 und 36 nicht an voneinander abgewandten Ventilsitzen 30, 32, sondern an einander zugewandten Ventilsitzen, das heißt im Inneren des Anschlussraumes 38 angeordnet werden, um die gewünschte Selbsthaltefunktion, wie sie beschrieben wurde, zu erreichen.

Nachfolgend werden nun verschiedene Ausführungsbeispiele von Schalteinrichtungen beschrieben, welche alle in der in den Fig. 1 bis 4 gezeigten Weise in ein hydraulisches System, wie das gezeigte Heizungssystem, integriert werden könnten. Die übrigen, in den nachfolgenden Beispielen nicht gezeigten Bauteile, insbesondere das Pumpenaggregat 2 sowie die Wärmetauscher 12, 16 und 20 und deren Anordnung können entsprechend sein. Insofern wird auf die vorangehende Beschreibung verwiesen.

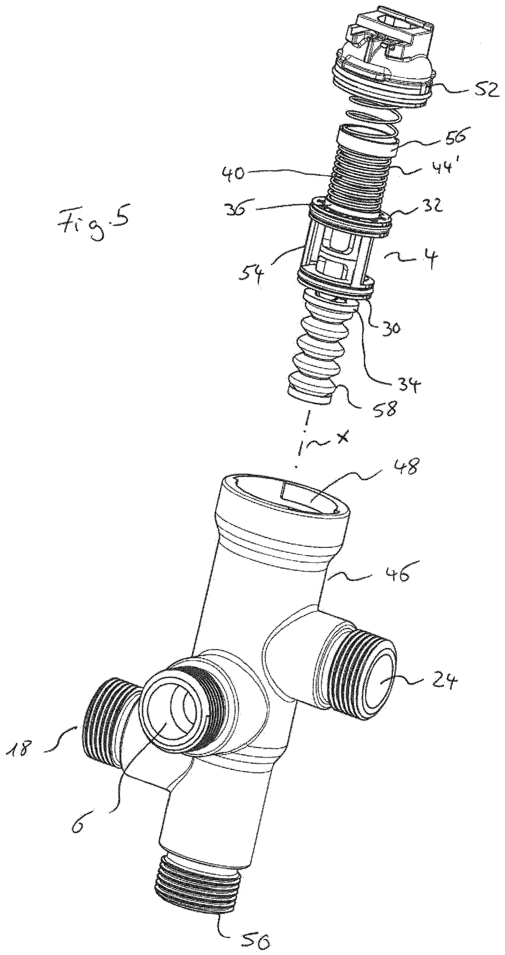

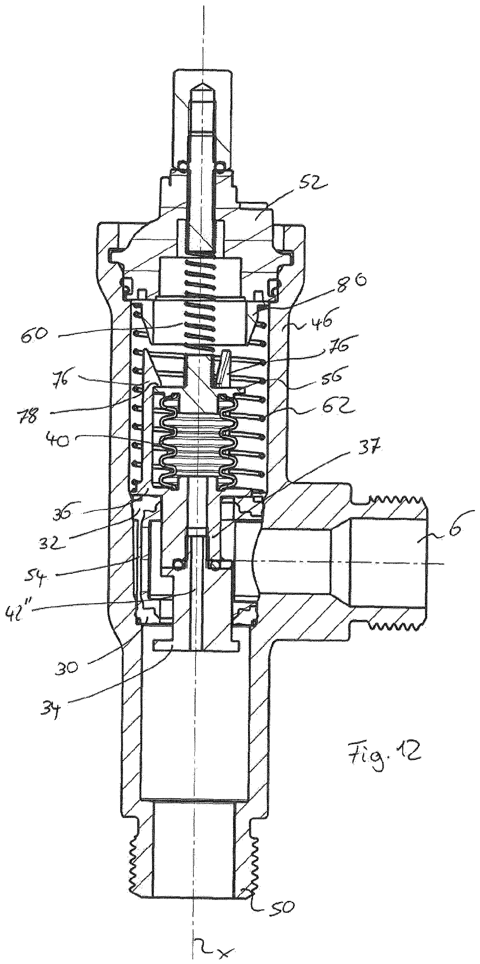

Die nachfolgend beschriebenen Ausführungsbeispiele gemäß Fig. 5 bis 8 sowie 11 bis 19 unterscheiden sich in der Art des Aufbaus der Schalteinrichtung. Diesen Schalteinrichtungen gemeinsam ist ein Gehäuse 46, in welchem die eigentliche Schalteinrichtung 4 als Kartusche angeordnet ist. Dies ermöglicht eine einfache Montage auch in komplexen Leitungssystemen, wie sie beispielsweise integrierte Baueinheiten für Kompaktheizungsanlagen, sogenannte Heizungsblöcke aufweisen. Das Gehäuse 46 weist eine Einsetzöffnung 48 an einem Längsende sowie eine weitere Montageöffnung 50 am entgegengesetzten Längsende auf. Die Einsetzöffnung 48 wird durch einen Verschluss 52 und die Montageöffnung 50 wird zum Betrieb durch einen hier nicht gezeigten Gewindestopfen verschlossen. An dem Gehäuse sind der Ausgang 6 sowie der erste Eingang 18 und der zweite Eingang 24 als Anschlussstutzen ausgebildet. Anstelle dieser Anschlussstutzen können auch einstückige oder anderweitig ausgebildete Verbindungen zu weiteren Komponenten des hydraulischen Systems vorgesehen sein, insbesondere wenn das Gehäuse 46 Teil einer integrierten Baueinheit für eine Heizungsanlage ist. Wie auch in dem Ausführungsbeispiel gemäß Fig. 1 bis 4 sind die Eingänge 18 und 24 sowie der Ausgang 6 in axialer Richtung X versetzt, wobei der Ausgang 6 zwischen den Eingängen 18 und 24 liegt.

Die in den Fig. 5 bis 8 dargestellte Schalteinrichtung 4 funktioniert in der Weise, wie sie anhand der Fig. 1 bis 4 beschrieben wurde. Angrenzend an den Ausgang 6 ist ein Anschlussraum 38 im Inneren des Gehäuses 46 vorgesehen, welcher zwei voneinander abgewandte Ventilsitze 30 und 32 aufweist. Wie in Fig. 5 zu erkennen, sind die Ventilsitze 30 und 32 an einem zentralen Trägerelement 54 ausgebildet, welches dichtend in den Aufnahmeraum 38 eingeschoben wird. Dem Ventilsitz 30 zugewandt ist ein erstes Ventilelement 34, dem Ventilsitz 32 zugewandt ist ein zweites Ventilelement 36. Die Ventilelemente 34 und 36 sind die Schaltelemente der Schalteinrichtung und über ein Verbindungselement 37 miteinander verbunden. In dem hier gezeigten Beispiel wird das Verbindungselement 37 durch Verlängerungen der Ventilelemente 34 und 36, welche miteinander verschraubt sind, gebildet. Es ist jedoch auch eine anderweitige Verbindung oder ein einstückiger Aufbau der Ventilelemente 34 und 36 möglich.

An dem Ventilelement 34 liegt, wie anhand der Fig. 1 bis 4 beschrieben, eine Faltenbalg 40 an. Dieser ist an seinem dem Ventilelement 36 abgewandten Axialende durch eine als Druckfläche dienende Scheibe 56 verschlossen. Auf die Scheibe 56 wirkt der an dem zweiten Eingang 24 anliegende Druck, wie es vorangehend beschrieben wurde und erzeugt so eine dem Ventilsitz 32 zugewandte in Axialrichtung X gerichtete Druckkraft. Den Faltenbalg 40 umgebend ist eine Feder 44' angeordnet, welche sich mit einem ersten Axialende an dem Ventilelement 36 abstützt und an dem entgegengesetzten Axialende in dem Verschluss 52 und damit an dem Gehäuse 46 fixiert ist. Die Scheibe 56 ist in der Feder 44' befestigt, so dass sie die Feder in zwei Abschnitte teilt, einen ersten Abschnitt, welcher zwischen der Scheibe 56 und dem Verschluss 52 gelegen ist und einen zweiten Abschnitt, welcher zwischen der Scheibe 56 und dem Ventilelement 36 gelegen ist. Der erste Abschnitt der Feder 44'hat dabei die Funktion der Feder 44, welche anhand der Fig. 1 bis 4 beschrieben wurde und insgesamt wirkt die Feder 44' in den zwei Abschnitten sowohl als Zug- und als Druckfeder, wie nachfolgend beschrieben wird.

In dem Verbindungselement 37 ist ein Durchgangsloch 42' ausgebildet, welches wie das Durchgangsloch 42 als Drossel wirkt und den Innenraum des Faltenbalges 40 mit dem Innenraum eines zweiten Faltenbalges 58 verbindet, welcher an dem Ventilelement 34 an dessen dem Ventilsitz 30 abgewandten Seite angeordnet ist. So wird im Inneren der Faltenbälge 40 und 58 ein geschlossenes System geschaffen, welches mit einer Flüssigkeit, insbesondere Wasser gefüllt sein kann. Es findet dabei kein Flüssigkeitsaustausch mit dem umgebenden Fluid in dem hydraulischen System statt, so dass eine Verunreinigung der von dem Durchgangsloch 42 gebildeten Drosselstelle verhindert werden kann.

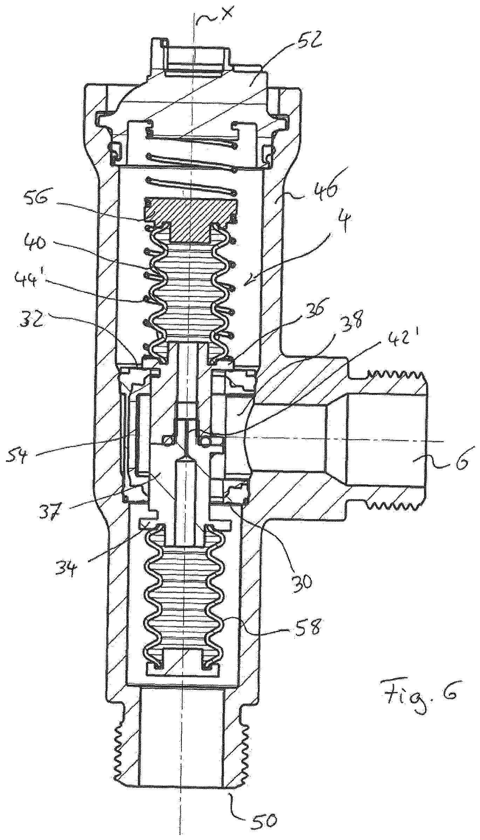

Fig. 6 zeigt die Ruhelage der Schalteinrichtung 4, in welcher sich die Schalteinrichtung bzw. deren Ventilelement 34 und 36 in ihrer ersten Schaltstellung befinden, in der das Ventilelement 36 an dem Ventilsitz 32 anliegt und das Ventilelement 34 von dem Ventilsitz 30 beabstandet ist. So ist entsprechend der Darstellung in Fig. 1 ein erster Strömungsweg, insbesondere durch einen Sekundärwärmetauscher 16 geöffnet, wenn die Schalteinrichtung in entsprechender Weise wie in den Fig. 1 - 4 gezeigt eingesetzt wird. Die Feder 44' wirkt in ihrer Gesamtheit in dieser Stellung als Druckfeder und drückt das Ventilelement 36 gegen den Ventilsitz 32. Wenn in diesem Zustand das Pumpenaggregat 2 in seinem ersten Betriebszustand, mit einer Drehzahl oberhalb einer ersten Grenzdrehzahl in Betrieb genommen wird, wird so an dem zweiten Eingang 24 in der oben beschriebenen Weise ein Druck erzeugt, welcher auf die Scheibe 56 eine Druckkraft in der Längsrichtung X zu dem Ventilsitz 32 hin erzeugt. Da an dem ersten Eingang 18 ein geringerer Druck herrscht, wird dabei die Scheibe 56 gegen die Druckkraft des zweiten Abschnittes der Feder 44' bewegt, wobei der Faltenbalg 40 gestaucht wird. Die Flüssigkeit im Inneren des Faltenbalges 40 wird dabei durch das Durchgangsloch 42' in das Innere des zweiten Faltenbalges 58 überführt. Durch die Bewegung der Scheibe 56 von dem Verschluss 52 weg wird gleichzeitig der erste Abschnitt der Feder 44' gelängt, so dass dieser Abschnitt als Zugfeder gedehnt wird. Auf diese Weise wird in der Feder in diesem Betriebszustand Energie bzw. Schaltenergie gespeichert.

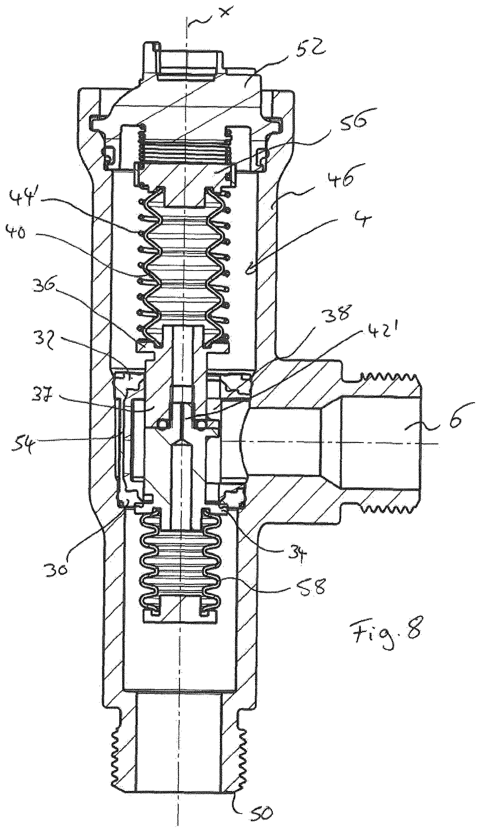

Wenn nun das Pumpenaggregat 2 von dessen Steuereinrichtung 28 in den zweiten Betriebszustand mit geringerer Drehzahl geschaltet wird, nimmt der auf die Scheibe 56 wirkende Druck ab, so dass die an der Scheibe 56 in Axialrichtung X wirkende Kraft nicht mehr im Gleichgewicht mit der Federkraft des gedehnten ersten Abschnittes der Feder 44' ist. Dieser erste Abschnitt der Feder zieht so die Scheibe 56 von dem Ventilsitz 32 weg. Da sich der Federbalg 40 aufgrund der Drosselwirkung des Durchgangsloches 42 nicht gleich wieder befüllt, wird dabei der gestauchte Federbalg gemeinsam mit dem Ventilelement 36 von dem Ventilsitz 32 wegbewegt und das Ventil wird so geöffnet. Gleichzeitig kommt das Ventilelement 34 an dem Ventilsitz 30 in dichte Anlage. Wird nun das Pumpenaggregat 2, bevor sich der Faltenbalg 40 wieder entfaltet, in den ersten Betriebszustand mit höherer Drehzahl versetzt, wirkt nun an dem ersten Anschluss 18 der höhere Druck und erzeugt so auf die Stirnseite des Faltenbalges 58 und somit das Ventilelement 34 eine dem Ventilsitz 30 zugewandte in Axialrichtung X wirkende Kraft. Diese hält das Ventilelement 34 an dem Ventilsitz 30 in dichter Anlage. Es ist somit wieder ein selbsthaltender Zustand des Ventils beim Betrieb des hydraulischen Systems erreicht. Aufgrund der Druckkraft entleert sich nun der zweite Faltenbalg 58 über das Durchgangsloch 42', so dass der erste Faltenbalg 40 wieder expandiert und den in Fig. 8 gezeigten Zustand erreicht. In diesem Zustand ist der zuvor als Zugfeder wirkende erste Abschnitt der Feder 44' gestaucht, so dass dieser Abschnitt nunmehr als Druckfeder wirkt. Wird das Pumpenaggregat aus diesem Zustand heraus abgeschaltet, fällt der Druck auf die Stirnseite des zweiten Faltenbalges 58 weg und der erste Abschnitt der Feder 44' zwischen der Scheibe 56 und dem Verschluss 52 wirkt als Rückstellelement und erzeugt eine solche Druckkraft, dass der Faltenbalg 40 gemeinsam mit dem Ventilelement 36 wieder gegen den Ventilsitz 32 bewegt wird, so dass die in Fig. 6 gezeigte Ausgangslage erreicht wird. Gleichzeitig wird wiederum Flüssigkeit aus dem Faltenbalg 40 in den Faltenbalg 58 verlagert, da sich der zweite Abschnitt der Feder 44'ebenfalls entspannt, das heißt zusammenzieht.

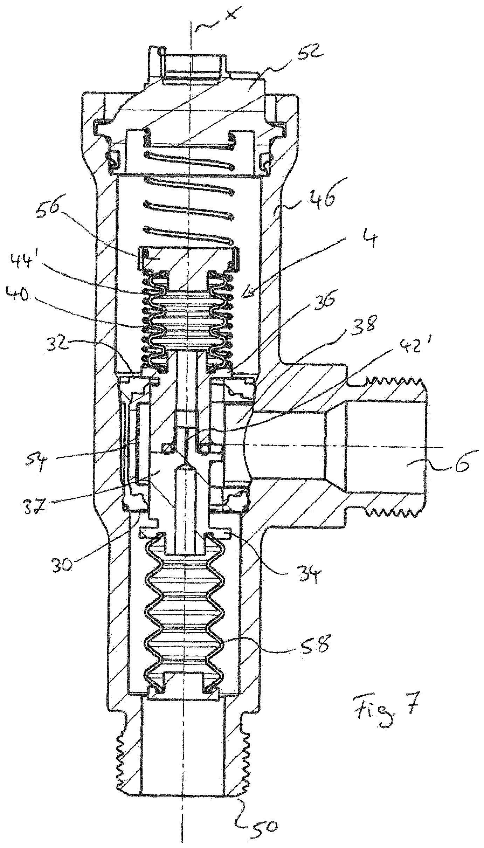

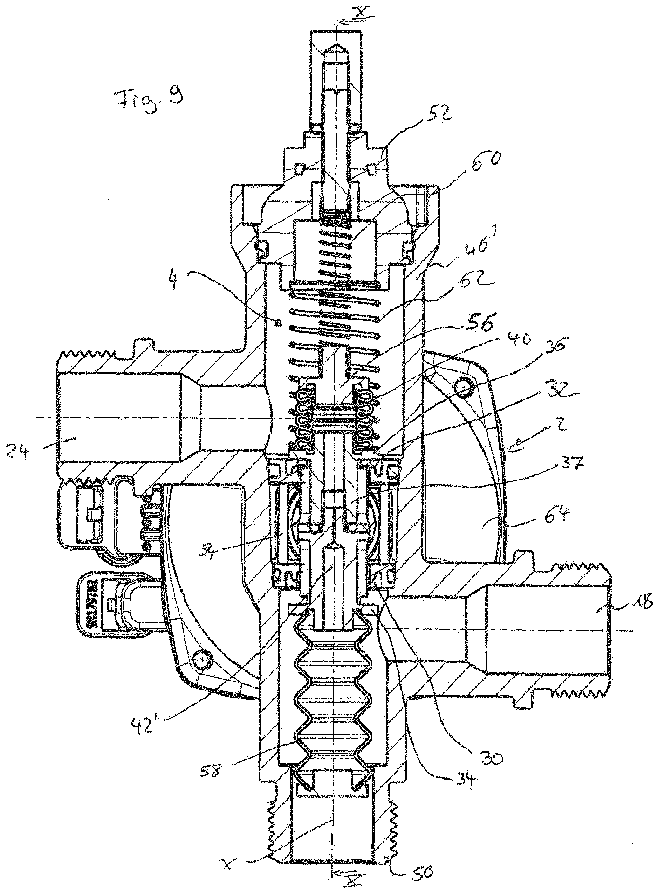

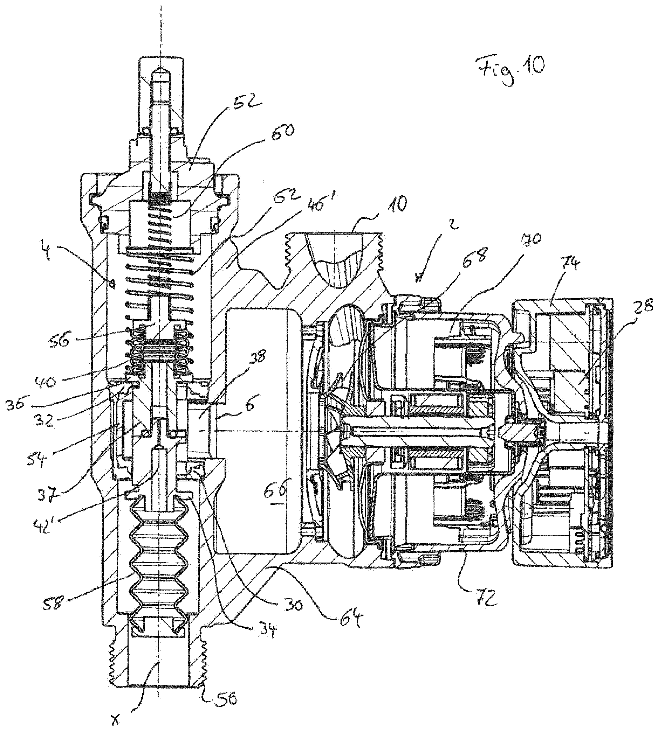

Das Ausführungsbeispiel in Fig. 9 und 10 zeigt eine weitere Ausführungsform der erfindungsgemäßen Schalteirichtung, welche im Wesentlichen der anhand der Fig. 5 bis 8 erläuterten Schalteinrichtung entspricht. Lediglich die Anordnung der Federn ist eine andere. Anstatt einer Feder 44' sind bei dem Ausführungsbeispiel gemäß Fig. 9 und 10 zwei Federn 60 und 62 vorgesehen, eine Zugfeder 60 und eine Druckfeder 62. Die Druckfeder 62 stützt sich direkt zwischen dem Verschluss 52 und dem Ventilelement 36 ab, während die Zugfeder 60 die Scheibe 56 mit dem Verschluss 52 verbindet. Die Fig. 9 und 10 zeigen die erste Schaltstellung, welche Fig. 7 entspricht, das heißt während sich das Pumpenaggregat in dem ersten Betriebszustand befindet und der Faltenbalg 40 durch den Druck am zweiten Eingang 24 gestaucht ist. Die Feder 60 wirkt als Zugfeder, welche, wenn der Faltenbalg 40 gestaucht wird, gedehnt wird und als Energiespeicher fungiert. Wenn das Pumpenaggregat 2 in den zweiten Betriebszustand mit geringerer Drehzahl geschaltet wird und die Haltekraft, welche auf das Ventilelement 36 wirkt, nachlässt, zieht die Zugfeder 60 die Anordnung bestehend aus der Scheibe 56, dem gestauchten Faltenbalg 40 und dem Ventilelement 36 in Richtung zu dem Verschluss 52, das heißt in axialer Richtung X von dem Ventilsitz 32 weg. Dabei wird gleichzeitig das Ventilelement 34 an dem Ventilsitz 30 zur Anlage gebracht. Bei dieser Bewegung wird gleichzeitig die Druckfeder 62, welche als Rückstellelement fungiert, gestaucht. Beim Abschalten der Pumpe bewegt die Druckfeder 62 das Ventilelement 36 wieder in die Ausgangslage zurück, in welcher das Ventilelement 36 an dem Ventilsitz 32 anliegt. Die Zugfeder 60 muss eine größere Kraft aufbringen als die Druckfeder 62, da die Zugfeder 60 die von der Druckfeder 62 erzeugte Federkraft mit überwinden muss, um das Ventil in der beschriebene Weise umzuschalten.

Im Unterschied zu dem anhand der Fig. 5 bis 8 beschriebenen Ausführungsform ist bei dem Ausführungsbeispiel gemäß Fig. 9 und 10 das Gehäuse 46' der Schalteinrichtung 4 integral mit einem Pumpengehäuse 64 des Pumpenaggregates 2 ausgebildet. Hier sind das Pumpengehäuse 64 und das Gehäuse 46' einstückig ausgebildet. Der Ausgang 6 der Schalteinrichtung 4 mündet direkt in den Saugraum 66 des Pumpengehäuses. In dem Pumpengehäuse ist ein Laufrad 68 angeordnet, welches über einen als Spaltrohrmotor ausgebildeten elektrischen Antriebsmotor 70 angetrieben wird. Der Antriebsmotor 70 ist in einem mit dem Pumpengehäuse 64 verbundenen Motor bzw. Statorgehäuse 72 angeordnet. Axialseitig an das Motorgehäuse 72 angesetzt ist ein Klemmenkasten bzw. Elektronikgehäuse 74, in dem die Steuereinrichtung 28 angeordnet ist. So wird eine Baueinheit bestehend aus Pumpenaggregat, Steuereinrichtung 28 und Schalteinrichtung 4 geschaffen, welche als solche auf einfache Weise in ein hydraulisches System wie ein Heizungssystem integriert werden kann. Es ist zu verstehen, dass auch die vorangehend beschriebenen und nachfolgend beschriebenen Beispiele von Schalteinrichtungen in gleicher Weise mit dem Pumpenaggregat 2 zu einer Baueinheit integriert werden können, wie es in den Fig. 9 und 10 gezeigt ist. Zur Vereinfachung werden die weiteren Ausführungsbeispiele anhand eines separaten Gehäuses 46 beschrieben.

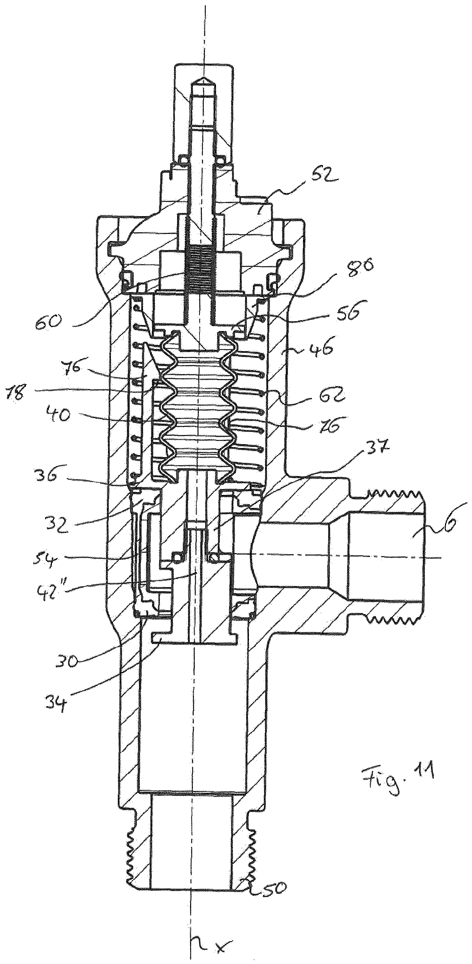

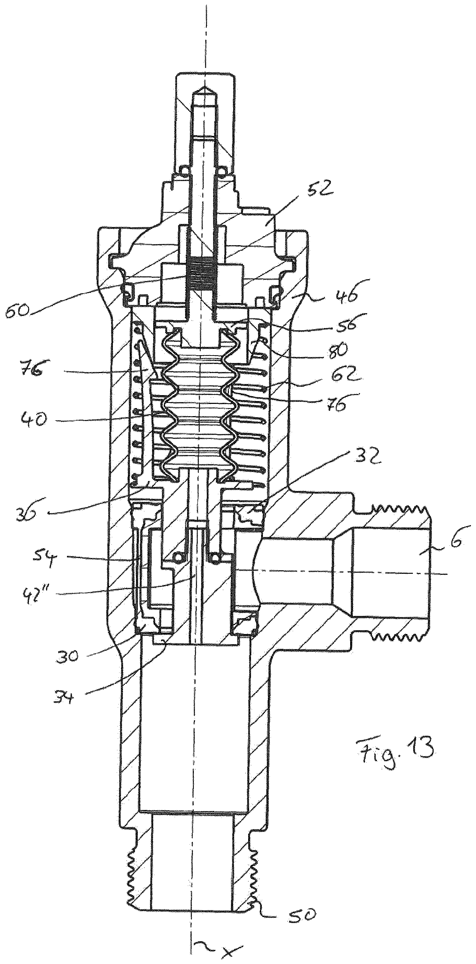

Die in den Fig. 11 bis 13 gezeigte Ausführungsform unterscheidet sich von den vorangehenden Ausführungsformen dadurch, dass die Entkopplung des Ladevorganges von der Bewegung des Ventilelementes 36 und die Kopplung der Bewegung des Ventilelementes 36 mit dem Entladevorganges des Energiespeichers nicht über ein als Drosselstelle wirkendes Durchgangsloch 42, 42' erfolgt, sondern über eine mechanische Verriegelung, wie sie nachfolgend beschrieben wird. Das in den Fig. 11 und 13 zwischen den Ventilelementen 34 und 36 gezeigte Durchgangsloch 42" wirkt im Wesentlichen nicht als Drosselstelle. Wie bei der Ausführungsform gemäß Fig. 9 und 10 greift an der Scheibe 56, welche den Faltenbalg 40 am axialen Ende verschließt, eine Zugfeder 60 an, welche an dem Verschluss 52 befestigt ist. Ferner ist auch bei diesem Ausführungsbeispiel eine Druckfeder 62 vorgesehen, welche sich mit einem Axialende an dem Verschluss 52 abstützt und mit dem entgegengesetzten Axialende an dem Ventilelement 36 anliegt. In der in Fig. 11 gezeigten Ausgangs- bzw. Ruhelage drückt die Druckfeder 62 das Ventilelement 36 gegen den Ventilsitz 32, so dass gleichzeitig das Ventilelement 34 von dem Ventilelement 30 abgehoben ist. In diesem Zustand ist die Zugfeder 60 vollständig zusammengezogen. Wenn nun in diesem Zustand das Pumpenaggregat 2 von der Steuereinrichtung 28 eingeschaltet und in dem ersten Betriebszustand mit hoher Drehzahl betrieben wird, wirkt auf die Scheibe 56 in der vorangehend beschriebenen Weise durch den am zweiten Eingang 24 anliegenden hydraulischen Druck eine Druckkraft, welche die Scheibe 56 in axialer Richtung X zu dem Ventilsitz 32 hin verlagert. Dabei wird der Faltenbalg 40 gestaucht und die Flüssigkeit im Inneren des Faltenbalges 40 durch das Durchgangsloch 32' durch das Ventilelement 34 in das umgebende hydraulische System gedrückt. Das heißt hier ist kein geschlossenes System im Inneren des Faltenbalges 40 vorgesehen. Die Scheibe 56 passiert dabei Rasthaken 76, welche sich parallel zur axialen Richtung X ausgehend von dem Ventilelement 36 erstrecken. Die Rasthaken 76 sind als federnde Zungen ausgebildet und fest mit dem Ventilelement 36 verbunden, vorzugsweise einstückig mit diesem ausgebildet. Die Rasthaken 76 sind an ihrem freien Ende, welches den Verschluss 52 zugewandt ist, jeweils so angeschrägt, dass sie sich beim Passieren der Scheibe 56 radial aufweiten. Nach dem Passieren der Scheibe 56 federn sie radial nach innen zurück und halten die Scheibe 56 an den Anlageschultern 78.

Wenn nun das Pumpenaggregat in den zweiten Betriebszustand mit geringerer Drehzahl geschaltet wird, verringert sich die Druckkraft auf die Scheibe 56, so dass die von der gespannten Zugfeder 60 erzeugte Federkraft diese Druckkraft überschreitet. So entlädt sich die in der Zugfeder 60 gespeicherte Schaltenergie und die Zugfeder 60 zieht die Scheibe 56 in axialer Richtung zu dem Verschluss 52 hin. Da die Scheibe 56 an den Anlageschultern 78 der Rasthaken 76 anliegt, wird dabei das mit den Rasthaken 76 verbundene Ventilelement 36 mitbewegt und in axialer Richtung X von dem Ventilsitz 32 abgehoben. Über das Verbindungselement 37 wird das andere Ventilelement 34 mitbewegt und zur Anlage an den Ventilsitz 30 gebracht, wie es in Fig. 13 gezeigt ist. Wenn das Ventilelement 36 um ein gewisses Maß in axialer Richtung bewegt ist, tritt zwischen die Rasthaken 76 ein am Außenumfang konisches Ringelement 80, welches an dem Verschluss 52 angeordnet ist und sich von diesem ausgehend in axialer Richtung erstreckt. Das Ringelement 80 tritt so zwischen die Rasthaken 76 ein, da diese radial nach außen gedrückt werden, so dass die Anlageschultern 78 von der Scheibe 56 außer Eingriff treten. In diesem Zustand kann die Zugfeder 60, gegebenenfalls unterstützt durch elastische Rückstellkräfte des Faltenbalges 40 die Scheibe 56 weiter zu dem Verschluss 52 hin bewegen und so den Faltenbalg 40 entspannen, wobei das Innere des Faltbalges 40 über das Durchgangsloch 42'wieder mit Flüssigkeit aus dem hydraulischen System gefüllt wird. Um wieder einen stabilen Betriebszustand zu erhalten, in welchem das von dem Ventilsitz 30 und dem Ventilelement 34 gebildete Ventil geschlossen gehalten wird, wird das Pumpenaggregat 2 rechtzeitig wieder in den ersten Betriebszustand versetzt, bevor die Scheibe 56 von den Rasthaken 76 in der beschriebenen Weise freigegeben wird. In dem ersten Betriebszustand wird wieder ein derart hoher Druck, nun an dem ersten Eingang 18 erzeugt, dass von dem Druck auf das Ventilelement 34 eine Druckkraft erzeugt wird, welche das Ventilelement 34 an den Ventilsitz 30 drückt, gegen die von der Druckfeder 62 erzeugte Drucckraft. Wenn das Pumpenaggregat ausgeschaltet oder wieder in den zweiten Betriebszustand zurückgeschaltet wird, lässt die Druckkraft, welche auf das Ventilelement 34 wirkt, derart nach, dass die von der Druckfeder 62 erzeugte Druckkraft größer wird, so dass dann das Ventilelement 36 und das Ventilelement 34 wieder in die in Fig. 11 gezeigte Ausgangslage zurückbewegt werden. Bei dem Ausführungsbeispiel gemäß Fig. 11 bis 13 wird eine Verzögerung der Entspannung des Faltenbalges 40 im Unterschied zu den vorangehenden Ausführungsbeispielen nicht über eine Drosselstelle sondern über den zurückgelegten Weg und die von den Rasthaken 76 gebildete mechanische Blockade realisiert. Jedoch wird auch bei diesem Ausführungsbeispiel erreicht, dass die Feder 60 in einem Ladevorgang Energie aus dem hydraulischen System aufnehmen kann, ohne dass sich die Ventilelemente 34 und 36 wesentlich verlagern müssen. Diese aufgenommene Energie kann dann in einem zweiten Betriebszustand des Pumpenaggregates zur Verlagerung der Ventilelemente 34 und 36 wieder abgegeben werden.

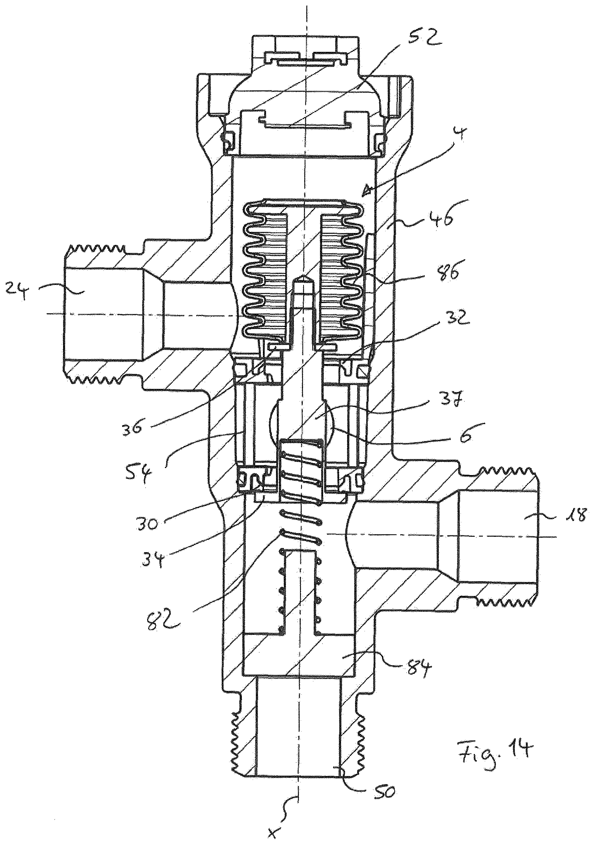

Die nachfolgend beschriebenen Ausführungsbeispiele gemäß der Fig. 14 bis 19 unterscheiden sich von den vorangehend beschriebenen Ausführungsbeispielen dadurch, dass in der Schalteinrichtung 4 kein separater Energiespeicher, insbesondere kein Energiespeicher in Form einer Feder vorgesehen ist, sondern dass diese Schalteinrichtungen Energie ausnutzen, welche in dem hydraulischen System selber gespeichert ist, insbesondere in Form von Trägheitsenergie des zirkulierenden Fluids.

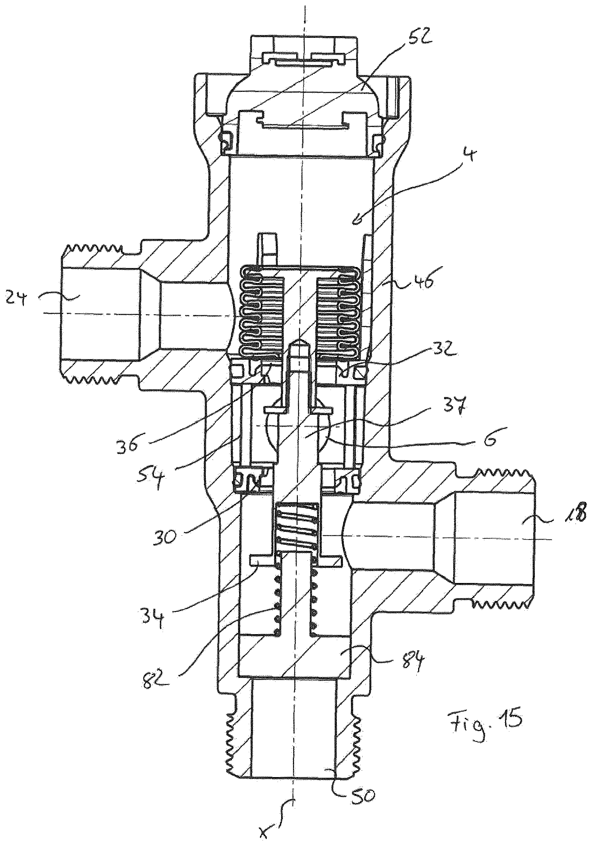

Die Fig. 14 und 15 zeigen ein erstes Ausführungsbeispiel einer Schalteinrichtung 4 für ein solches System. Fig. 14 zeigt die Ausgangslage mit einer ersten Schaltstellung der über das Verbindungselement 37 miteinander verbundenen Ventilelemente 34 und 36. Die Ventilelemente 34 und 36 können auch bei diesem Ausführungsbeispiel wechselseitig mit Ventilsitzen 30 und 32 zur Anlage kommen, welche im Wesentlichen wie vorangehend beschrieben ausgestaltet und angeordnet sind. Auch die Ausgestaltung des Gehäuses 46 mit den Anschlüssen bzw. den Eingängen 18 und 24 sowie dem Ausgang 6 entspricht der vorangehend beschriebenen Gestaltung. Insofern wird auf die vorangehenden Ausführungen verwiesen. Bei diesem Ausführungsbeispiel ist in der Ausgangs- bzw. Ruhelage, welche der ersten Schaltstellung entspricht, das Ventil, welches von dem Ventilsitz 30 und dem Ventilelement 34 gebildet wird, geschlossen, wie es in Fig. 14 gezeigt ist. Die Ruhelage wird durch eine Rückstellfeder 82 gehalten. Die Rückstellfeder 82 ist als Druckfeder ausgebildet und stützt sich zwischen dem Ventilelement 34 und einem Träger 84, welcher an der Montageöffnung 50 anliegt, ab. Der Träger 84 könnte auch einstückig mit dem Gehäuse 46 ausgebildet sein. Wenn in diesem Zustand das Pumpenaggregat 2 in Betrieb genommen und in dem ersten Betriebszustand mit hohem Druck betrieben wird, liegt an dem Eingang 18 der Druck am Knotenpunkt 14 an und drückt gegen das Ventilelement 34, so dass dieses an dem Ventilsitz 30 in Anlage gehalten wird. Somit ist im Betrieb des hydraulischen Systems ein stabiler selbsthaltender Zustand gegeben. Gleichzeitig strömt Fluid von dem zweiten Eingang 34 durch den Spalt zwischen dem Ventilelement 36 und dem Ventilsitz 32 zu dem Ausgang 6. Dabei hat das Fluid bzw. die strömende Flüssigkeit eine gewisse kinetische Energie. Wenn nun das Pumpenaggregat 2 in einen zweiten Betriebszustand mit geringerer Drehzahl geschaltet wird, welche unter einer Grenzdrehzahl liegt, bis zu welcher die Selbsthaltefunktion gegeben ist, nimmt die von dem Druck auf das Ventilelement 34 wirkende Kraft ab, so dass die Selbsthaltefunktion aufgehoben ist. Dabei nimmt der Druck schneller ab als die Strömungsgeschwindigkeit bzw. aus der Strömung herrührende kinetische Energie der Flüssigkeit. Diese Strömungsenergie wirkt weiterhin auf das Ventilelement 36, so dass dieses dann von der Strömung mitgerissen und mit dem Ventilsitz 32 zur Anlage gebracht wird, während gleichzeitig das Ventilelement 34 über das Verbindungselement 37 von dem Ventilsitz 30 abgehoben wird.

Wenn in diesem zweiten Betriebszustand das Pumpenaggregat nicht ganz ausgeschaltet ist, sondern mit verringerter Drehzahl weiter betrieben wird, liegt dann gleich an dem zweiten Eingang 24 wieder der Druck am Knotenpunkt 14 an, welcher auf das Ventilelement 36 eine Druckkraft ausübt, welche das Ventilelement mit dem Ventilsitz 32 in Anlage hält. So wird gleich wieder ein selbsthaltender Zustand erreicht, welcher weiter gehalten wird, wenn das Pumpenaggregat dann wieder in seinen ersten Betriebszustand versetzt wird. So ist auch hierbei ohne zusätzlichen Antrieb ein Umschalten des Strömungsweges zwischen den Eingängen 18 und 24 möglich, wobei zuvor im System gespeicherte Energie für die Bewegung der Ventilelemente 34 und 36 ausgenutzt wird. In diesem System ist zusätzlich ein Balg 86 vorgesehen, welcher das Ventilelement 36 mit dem Verbindungselement 37 verbindet. Der Balg 86 dient als Dämpfer und verhindert, dass das Ventilelement 36, wenn es durch die Strömung gegen den Ventilsitz 32 gedrückt wird, sich durch die Aufprallenergie gleich wieder zurückbewegt. Diese Aufprallenergie kann durch Einfedern des Balges 86 aufgenommen werden. Dieser Zustand ist in Fig. 15 gezeigt. Wenn in diesem Zustand das Pumpenaggregat abgeschaltet wird, wird wiederum der hydraulische Druck aufgehoben, welcher die Haltekraft auf das Ventilelement 36 ausübt, so dass diese Haltekraft von der Druckkraft, welche die Feder 82 ausübt, überwunden wird. Die Feder 82 bewegt dann als Rückstellelement die Ventilelemente 34 und 36 wieder in die in Fig. 14 gezeigte Ausgangslage zurück.

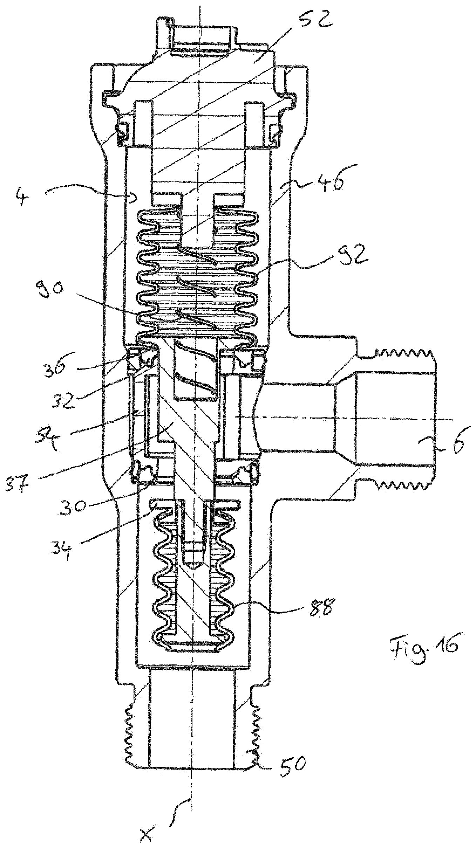

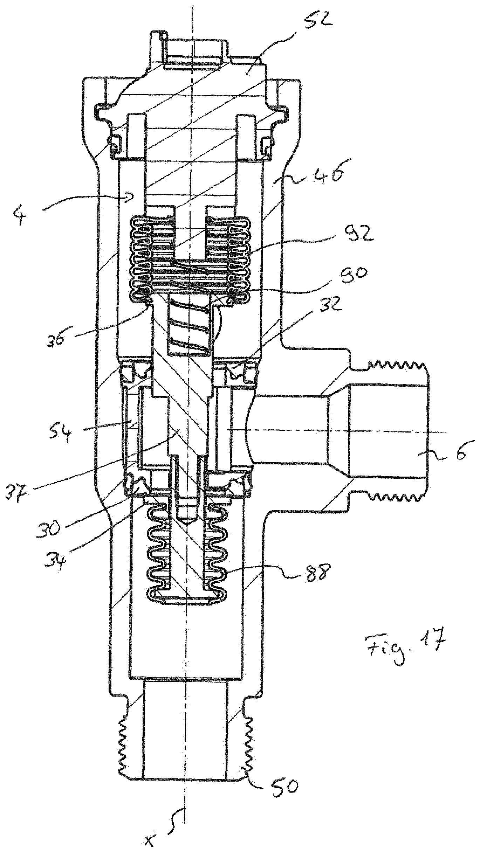

Das Ausführungsbeispiel gemäß Fig. 16 und 17 unterscheidet sich von dem Ausführungsbeispiel gemäß Fig. 14 und 15 zum einen dadurch, dass in der in Fig. 16 gezeigten Ruhelage, welche der ersten Schaltstellung entspricht, das Ventilelement 36 an seinem Dichtsitz 32 anliegt, während das Ventilelement 34 von dem Ventilsitz 30 abgehoben ist. Das heißt in dieser Ausgangslage ist wie in Fig. 1 bis 4 beschrieben der Kreislauf über den Sekundärwärmetauscher 16 geöffnet, während bei dem Ausführungsbeispiel gemäß Fig. 14 und 15 der Strömungsweg durch den Heizkreis in der ersten Schaltstellung geöffnet ist. Ferner ist bei dem Ausführungsbeispiel gemäß Fig. 16 und 17 das Ventilelement 34 über einen Balg 88, welcher dem Balg 86 entspricht, mit dem Verbindungselement 37 verbunden. Auch der Balg 88 dient als Dämpfer, wenn das Ventilelement 34 an den Ventilsitz 30 anschlägt. Ferner ist das Ventilelement 36 über eine Feder 90, welche in ihrer Funktion der Feder 82 in den Fig. 14 und 15 entspricht, an dem Verschluss 52 abgestützt. Die Feder 90 umgebend ist ferner ein weiterer Balg 92 angeordnet, welcher zwischen dem Verschluss 52 und dem Ventilelement 36 angeordnet ist und als weiterer Dämpfer dient. Der Balg 92 weist ebenfalls eine als Drosselstelle wirkende Öffnung auf, welche beispielsweise im Anlagebereich zu dem Ventilelement 36 ausgebildet sein kann. Bei dieser Ausführungsform wird das Ventilelement 36 an dem Ventilsitz 32 durch den am zweiten Eingang 24 herrschenden Druck gehalten, solange das Pumpenaggregat 2 in dem ersten Betriebszustand mit höherer Drehzahl betrieben wird. Wird diese Haltekraft durch Verringerung der Drehzahl des Pumpenaggregates 2 in einem zweiten Betriebszustand verringert, wird der selbsthaltende Zustand aufgehoben und das Ventilelement 34 durch die noch in Fluid vorhandene Strömungsenergie gegen den Ventilsitz 30 gezogen. Der Anschlag wird dabei über die Bälge 88 und 92 abgedämpft, so dass ein unmittelbares Zurückschlagen verhindert wird. Entweder durch den bei Weiterbetrieb des Pumpenaggregates herrschenden Druck oder aber durch Wiederinbetriebnahme des Pumpenaggregates 2 in dem ersten Betriebszustand, wirkt dann ein ausreichender Haltedruck auf das Ventilelement 34, so dass wiederrum ein selbsthaltender Zustand erreicht wird.

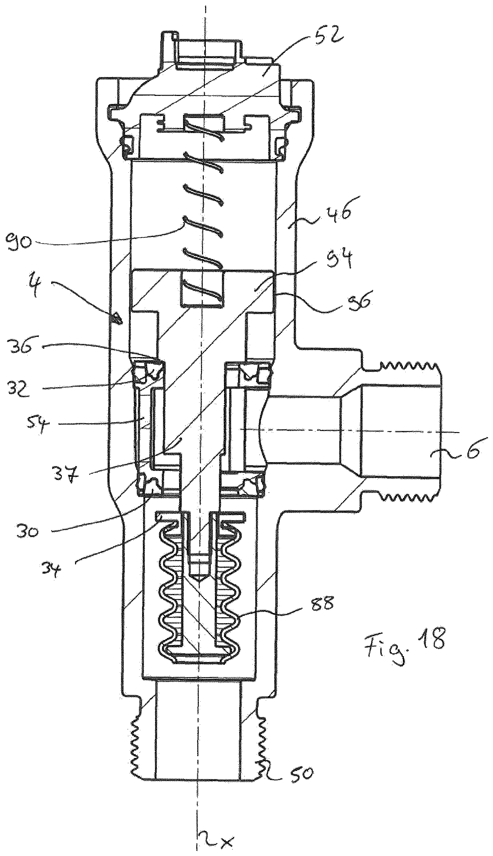

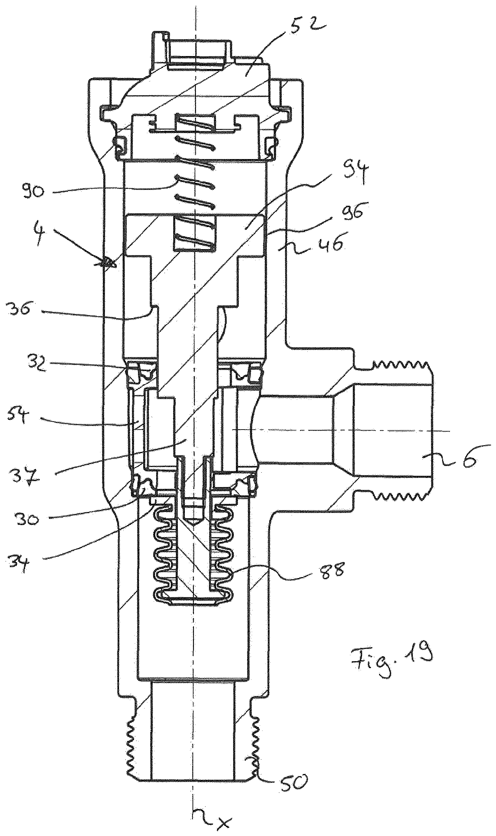

Das Ausführungsbeispiel gemäß Fig. 18 und 19 unterscheidet sich von dem Ausführungsbeispielen gemäß Fig. 16 und 17 dadurch, dass auf den Balg 92 verzichtet wurde und stattdessen an das Ventilelement 36 ein Kolben 94 angeformt ist, welcher in dem Gehäuse 46 in axialer Richtung X beweglich ist. Zwischen der Umfangswandung des Kolbens 94 und der Innenwandung des Gehäuses 46 ist ein Ringspalt 96 ausgebildet, welcher als Drosselstelle wirkt. Diese Drosselstelle führt zu einer Dämpfung bei der Bewegung des Kolbens 94, da die Flüssigkeit durch den Ringspalt 96 von der einen Seite zu der anderen Seite des Kolbens 94 strömen muss. So übernimmt der Kolben 94 mit dem Ringspalt 96 die Funktion des zuvor beschriebenen Balges 92. Im Übrigen ist die Funktionsweise der Schalteinrichtung gemäß Fig. 18 und 19 dieselbe wie anhand von Fig. 16 und 17 beschrieben.

Das Pumpenaggregat 2 ist vorzugsweise als Pumpenaggregat mit einem über einen Frequenzumrichter angesteuerten elektrischen Antriebsmotor ausgebildet. Die Verwendung einer solchen Ansteuerung hat den Vorteil, dass das Pumpenaggregat 2 beim Verringern der Drehzahl zusätzlich durch gegenläufige magnetische Felder gebremst werden kann. Somit wird eine schnellere Drehzahlverringerung erreicht. Die verwendeten Bälge bzw. Faltenbälge 40, 58, 86, 88 und 92 sind vorzugsweise aus Gummi oder einem geeigneten Elastomer gefertigt.

### Bezugszeichenliste

- 2: Pumpenaggregat
- 4: Schalteinrichtung
- 6: Ausgang
- 8: saugseitiger Anschluss
- 10: druckseitiger Anschluss
- 12: Primärwärmetauscher
- 14: Knotenpunkt
- 16: Sekundärwärmetaucher
- 18: erster Eingang
- 20: Heizkörper
- 22: Regulierventil
- 24: zweiter Eingang
- 26: Bypass
- 28: Steuereinrichtung
- 30, 32: Ventilsitze
- 34, 36: Ventilelemente
- 37: Verbindungselement
- 38: Anschlussraum
- 40: Faltenbalg
- 42, 42', 42": Durchgangsloch
- 44, 44': Feder
- 46, 46': Gehäuse
- 48: Einsetzöffnung
- 50: Montageöffnung
- 52: Verschluss
- 54: Trägerelement
- 56: Scheibe
- 58: zweiter Faltenbalg
- 60: Zugfeder
- 62: Druckfeder
- 64: Pumpengehäuse
- 66: Saugraum
- 68: Laufrad
- 70: Antriebsmotor
- 72: Motorgehäuse
- 74: Elektronikgehäuse
- 76: Rasthaken
- 78: Anlageschultern
- 80: Ringelement
- 82: Rückstellfeder
- 84: Träger
- 86, 88: Bälge
- 90: Feder
- 92: Balg
- 94: Kolben
- 96: Drosselstelle
- X: Längsachse

## Patentansprüche

1. Hydraulisches System, welches ein Heizungssystem ist, mit zumindest einem Pumpenaggregat (2) und einer Schalteinrichtung (4), welche zumindest zwei Schaltstellungen aufweist,
**dadurch gekennzeichnet, dass**
die Schalteinrichtung (34, 36) derart ausgebildet ist, dass sie bei Betrieb des Pumpenaggregates (2) in einem ersten Betriebszustand in jeder der zumindest zwei Schaltstellungen jeweils durch die hydraulischen Kräfte in dem System stabil gehalten wird und in einem zweiten Betriebszustand des Pumpenaggregates (2) die Schalteinrichtung (34, 36) mithilfe von in dem ersten Betriebszustand gespeicherter Schaltenergie von einer ersten Schaltstellung in eine zweite Schaltstellung bewegt wird, wobei das hydraulische System derart ausgebildet ist, dass in dem ersten Betriebszustand die Schaltenergie unabhängig von einem Umschalten der Schalteinrichtung (34, 36) zwischen den Schaltstellungen gespeichert wird.

2. Hydraulisches System nach Anspruch 1, **dadurch gekennzeichnet, dass** das System zumindest einen Energiespeicher (44; 44'; 60) aufweist, welcher derart ausgestaltet ist, dass er bei Betrieb des Pumpenaggregates (2) in dem ersten Betriebszustand von einem hydraulischen Druck in dem hydraulischen System beaufschlagt ist und in einem Ladevorgang Schaltenergie speichert, wobei die Schalteinrichtung (4) in ihrer eingenommenen Schaltstellung verbleibt, und
dass der Energiespeicher (44; 44'; 60) mit der Schalteinrichtung (34, 36) in einer Weise kraftübertragend gekoppelt ist, dass in dem zweiten Betriebszustand des Pumpenaggregates die Schalteinrichtung (34, 36) durch eine von dem Energiespeicher (44; 44'; 60) erzeugte Kraft in eine zweite Schaltstellung bewegt wird.

3. Hydraulisches System nach Anspruch 2, **dadurch gekennzeichnet, dass** der Energiespeicher (44; 44'; 60) ein Teil der Schalteinrichtung ist und/oder ein Fluid in dem hydraulischen System, insbesondere ein in Bewegung befindliches Fluid als Energiespeicher fungiert.

4. Hydraulisches System nach einem der vorangehenden Ansprüche, **dadurch gekennzeichnet, dass** in dem ersten Betriebszustand das Pumpenaggregat (2) mit einer Drehzahl oberhalb einer Grenzdrehzahl betrieben wird und in dem zweiten Betriebszustand mit einer Drehzahl kleiner oder gleich der Grenzdrehzahl betrieben wird oder stillsteht.

5. Hydraulisches System nach einem der vorangehenden Ansprüche, **dadurch gekennzeichnet, dass** das Pumpenaggregat (2) einen Drehzahlsteller zur Veränderung der Drehzahl des Pumpenaggregates (2) aufweist, wobei der Drehzahlsteller eine Bremsschaltung aufweist, welche das Pumpenaggregat bei einer Verringerung der Drehzahl aktiv abbremst.

6. Hydraulisches System nach einem der Ansprüche 2 bis 5, **dadurch gekennzeichnet, dass** der Energiespeicher derart ausgebildet ist, dass bei Betrieb des Pumpenaggregates (2) in dem ersten Betriebszustand ein hydraulischer Druck einer von dem Energiespeicher erzeugten und auf die Schalteinrichtung wirkenden Kraft derart entgegenwirkt, dass ein Schaltvorgang unterbunden wird.

7. Hydraulisches System nach einem der Ansprüche 2 bis 6, **dadurch gekennzeichnet, dass** der Energiespeicher ein Federspeicher (44; 44'; 60), ein magnetischer, hydraulischer oder pneumatischer Energiespeicher ist.

8. Hydraulisches System nach einem der Ansprüche 2 bis 7, **dadurch gekennzeichnet, dass** der Energiespeicher (44; 44'; 60) eine Druckfläche aufweist oder mit einer Druckfläche verbunden ist, welche mit einem Strömungsweg in dem hydraulischen System derart verbunden ist, dass die Druckfläche mit einem von dem Pumpenaggregat erzeugten Fluiddruck beaufschlagt ist.

9. Hydraulisches System nach einem der Ansprüche 2 bis 8, **dadurch gekennzeichnet, dass** der Energiespeicher (44; 44'; 60) mit der Schalteinrichtung (34, 36) über ein elastisch verformbares Dämpfungselement (40) verbunden ist, welches derart ausgestaltet ist, dass es sich während des Ladevorganges des Energiespeichers (44; 44'; 60) verformt, ohne die Schalteinrichtung (34, 36) zu bewegen, wobei
vorzugsweise das Dämpfungselement (40) derart angeordnet ist, dass bei Betrieb des Pumpenaggregates (2) in dem ersten Betriebszustand auf das Dämpfungselement (40) ein von dem Pumpenaggregat (2) erzeugter hydraulischer Druck wirkt, welcher einer von dem Energiespeicher (44; 44'; 60) erzeugten auf das Dämpfungselement (40) wirkenden Kraft unter elastischer Verformung des Dämpfungselementes (40) entgegenwirkt.

10. Hydraulisches System nach Anspruch 9, **dadurch gekennzeichnet, dass** das Dämpfungselement (40) derartige Dämpfungseigenschaften aufweist, dass bei einer Reduzierung des hydraulischen Druckes eine Rückverformung des Dämpfungselementes (40) langsamer erfolgt als eine Entladung des Energiespeichers (44; 44'; 60).

11. Hydraulisches System nach Anspruch 9 oder 10, **dadurch gekennzeichnet, dass** das Dämpfungselement (40) als ein größenveränderliches Volumen ausgebildet ist, welches über eine Drosselstelle (42; 42') mit einem Fluid füll- und entleerbar ist, wobei
vorzugsweise das größenveränderliche Volumen über die Drosselstelle (42; 42') mit einem zweiten größenverönderlichen Ausgleichsvolumen (58) zu einem geschlossenen System verbunden ist.

12. Hydraulisches System nach einem der Ansprüche 9 bis 11, **dadurch gekennzeichnet, dass** das Dämpfungselement (40) mit einem Rückstellelement, insbesondere einer Rückstellfeder (44'; 62) versehen ist, welche eine Rückverformung bewirkt.

13. Hydraulisches System nach einem der Ansprüche 9 bis 12 , **dadurch gekennzeichnet, dass** eine Steuereinrichtung (28) des Pumpenaggregates (2) derart ausgebildet ist, dass sie zum Veranlassen eines Schaltvorganges der Schalteinrichtung (34, 36) für eine Schaltpause den Betrieb des Pumpenaggregates (2) von dem ersten Betriebszustand in den zweiten Betriebszustand ändert, wobei diese Schaltpause kürzer ist als eine Zeitspanne, welche die Rückverformung des Dämpfungselementes (40) in Anspruch nimmt.

14. Hydraulisches System nach einem der vorangehenden Ansprüche, **dadurch gekennzeichnet, dass** die Schalteinrichtung (34, 36) als Umschalteinrichtung und insbesondere als Umschalteinrichtung zum Umschalten eines Strömungsweges zwischen zumindest zwei Zweigen (16, 20) des hydraulischen Systems ausgebildet ist.

15. Hydraulisches System nach einem der vorangehenden Ansprüche, **dadurch gekennzeichnet, dass** das hydraulische System ein Kreislaufsystem ist und das Pumpenaggregat (2) ein Umwälzpumpenaggregat ist.

16. Hydraulisches System nach einem der vorangehenden Ansprüche, **dadurch gekennzeichnet, dass** eine Steuereinrichtung (28) vorhanden ist, welche zum Ändern der Betriebsart des Pumpenaggregates (2) zwischen dem ersten und dem zweiten Betriebszustand ausgebildet ist, um einen Schaltvorgang der Schalteinrichtung (34, 36) zu veranlassen.

17. Hydraulisches System nach einem der vorangehenden Ansprüche, **dadurch gekennzeichnet, dass** die Schalteinrichtung (34, 36) als ein Umschaltventil mit zwei Ventilsitzen (30, 32) ausgebildet ist und zwei zugehörige miteinander verbundene Ventilkörper (34, 36) aufweist, welche so angeordnet sind, dass, wenn ein Ventilkörper (34) an seinem zugehörigen Ventilsitz (30) dichtend anliegt, gleichzeitig der andere Ventilkörper (36) von seinem zugehörigen Ventilsitz (32) beabstandet ist, wobei
vorzugsweise das Umschaltventil in dem hydraulischen System so angeordnet ist, dass auf denjenigen Ventilkörper (34, 36), welcher an seinem zugehörigen Ventilsitz (30, 32) anliegt, bei Betrieb des Pumpenaggregates (2) in dem ersten Betriebszustand ein hydraulischer Druck derart wirkt, dass der Ventilkörper (34, 36) an dem Ventilsitz (30, 32) in Anlage gehalten wird.

18. Hydraulisches System nach einem der vorangehenden Ansprüche, **dadurch gekennzeichnet, dass** die Schalteinrichtung (34, 36) in ein Pumpengehäuse (64) des Pumpenaggregates (2) integriert ist.

19. Verfahren zum Betrieb eines hydraulischen Systems, welches ein Heizungssystem ist, mit einem Pumpenaggregat (2) und einer Schalteinrichtung (34, 36) mit zumindest zwei Schaltstellungen, **dadurch gekennzeichnet, dass** die Schalteinrichtung (34, 36) in einem ersten Betriebszustand des Pumpenaggregates (2) in jeder ihrer Schaltstellungen jeweils durch die hydraulischen Kräfte in dem System stabil gehalten wird und zum Umschalten der Schalteinrichtung (34, 36) von einer ersten in eine zweite Schaltstellung in einem zweiten Betriebszustand des Pumpenaggregates (2) zuvor durch Betrieb des Pumpenaggregates (2) in dem ersten Betriebszustand, vorzugsweise in einem Energiespeicher (44; 44'; 60) und/oder dem hydraulischen System, gespeicherte Schaltenergie verwendet wird.

20. Verfahren nach Anspruch 19, **dadurch gekennzeichnet, dass** eine hydraulische Trägheitskraft des in dem System strömenden Fluids zum Umschalten der Umschalteinrichtung (34, 36) genutzt wird.

## Claims

1. A hydraulic system, which is a heating system with at least one pump assembly (2) and with a switching device (4) which comprises at least two switch positions,
**characterised in that**
the switching device (34, 36) is designed in a manner such that on operation of the pump assembly (2) in a first operating condition, it is held in a stable manner in each of the at least two switch positions in each case by the hydraulic forces in the system, and in a second operating condition of the pump assembly (2), the switching device (34, 36) is moved from a first switch position into a second switch position with the help of switching energy stored in the first operating condition, wherein the hydraulic system is designed in a manner such that in the first operating condition the switching energy is stored independently of a switching of the switching device (34, 36) between the switch positions.

2. A hydraulic system according to claim 1, **characterised in that** the system comprises at least one energy store (44; 44'; 60) which is designed in a manner such that on operation of the pump assembly (2) in the first operating condition, it is subjected to a hydraulic pressure in the hydraulic system and stores switching energy in a charging procedure, wherein the switching device (4) remains in its assumed switch position, and
that the energy store (44; 44'; 60) is coupled to the switching device (34, 36) in a force-transmitting manner, in a manner such that in the second operating condition of the pump assembly, the switching device (34, 36) is moved into a second switch position by a force produced by the energy store (44; 44'; 60).

3. A hydraulic system according to claim 2, **characterised in that** the energy store (44; 44'; 60) is part of the switching device and/or a fluid in the hydraulic system, in particular a fluid in motion functions as a energy store.

4. A hydraulic system according to one of the preceding claims, **characterised in that** the pump assembly (2) is operated with a speed above a limit speed in the first operating condition, and with a speed which is smaller than or equal to the limit speed, or is at standstill, in the second operating condition

5. A hydraulic system according to one of the preceding claims, **characterised in that** the pump assembly (2) comprise a speed controller for changing the speed of the pump assembly (2), wherein the speed controller comprises a braking circuit which actively brakes the pump assembly given a reduction of the speed.

6. A hydraulic system according to one of the claims 2 to 5, **characterised in that** the energy store is designed in a manner such that on operation of the pump assembly (2) in the first operating condition, a hydraulic pressure counteracts a force which is produced by the energy store and which acts upon the switching device, in a manner such that a switching procedure is prevented.

7. A hydraulic system according to one of the claims 2 to 6, **characterised in that** the energy store is a spring store (44; 44'; 60), a magnetic, hydraulic or pneumatic energy store.

8. A hydraulic system according to claim 2 to 7, **characterised in that** the energy store (44; 44'; 60) comprises a pressure surface or is connected to a pressure surface, which is connected to a flow path in the hydraulic system in a manner such that the pressure surface is subjected to a fluid pressure produced by the pump assembly.

9. A hydraulic system according to one of the claims 2 to 8, **characterised in that** the energy store (44; 44'; 60) is connected to the switching device (34, 36) via an elastically deformable damping element (40) which is designed in a manner such that it deforms during the charging procedure of the energy store (44; 44'; 60), without moving the switching device (34, 36), wherein
the damping element (40) is preferably arranged in a manner such that on operation of the pump assembly (2) in the first operating condition, a hydraulic pressure which is produced by the pump assembly (2) and which counteracts a force produced by the energy store (44; 44'; 60) and acting upon the damping element (40) amid elastic deformation of the damping element (40), acts upon the damping element (40).

10. A hydraulic system according to claim 9, **characterised in that** the damping element (40) has such damping characteristics that a recovery of the damping element (40) is effected more slowly than a discharging of the energy store (44; 44'; 60), given a reduction of the hydraulic pressure.

11. A hydraulic system according to claim 9 or 10, **characterised in that** the damping element (40) is designed as a size-changeable volume which can be filled and emptied with a fluid via throttle location (42; 42'), wherein preferably the size-changeable volume is connected via the throttle location (42; 42') to a second size-changeable compensation volume (58), into a closed system.

12. A hydraulic system according to one of the claims 9 to 11, **characterised in that** the damping element (40) is provided with a restoring element, in particular a restoring spring (44'; 62) which effects a recovery.

13. A hydraulic system according to one of the claims 9 to 12, **characterised in that** a control device (28) of the pump assembly (2) is designed in a manner such that for initiating a switching procedure of the switching device (34, 36) for a switching pause, it changes the operation of the pump assembly (2) from the first operating condition into the second operating condition, wherein this switching pause is shorter than a time interval which the recovery of the damping elements (40) takes.

14. A hydraulic system according to one of the preceding claims, **characterised in that** the switching device (34, 36) is designed as a switch-over device and in particular as a switch-over device for switching over a flow path between at least two branches (16, 20) of the hydraulic system.

15. A hydraulic system according to one of the preceding claims, **characterised in that** the hydraulic system is a circulation system and the pump assembly (2) is a circulation pump assembly.

16. A hydraulic system according to one of the preceding claims, **characterised in that** a control device (28) is present, said control device being designed for changing the operating manner of the pump assembly (2) between the first and the second operating condition, in order to initiate a switching procedure of the switching device (34, 36).

17. A hydraulic system according to one of the preceding claims, **characterised in that** the switching device (34, 36) is designed as a switch-over valve with two valve seats (30, 32), and comprises two associated valve bodies (34, 36) which are connected to one another and which are arranged such that when a valve body (34) sealingly bears on its associated valve seat (30), the other valve body (36) is simultaneously distanced from its associated valve seat (32), wherein
preferably the switch-over valve is arranged in the hydraulic system such that on operation of the pump assembly (2) in the first operating condition, a hydraulic pressure acts upon that valve body (34, 36) which bears on its associated valve seat (30, 32), in a manner such that the valve body (34, 36) is held in contact on the valve seat (30, 32).

18. A hydraulic system according to one of the preceding claims, **characterised in that** the switching device (34, 36) is integrated into a pump casing (64) of the pump assembly (2).

19. A method for operation of a hydraulic system, which is a heating system with a pump assembly (2) and with a switching device (34, 36) with at least two switch positions, **characterised in that** the switching device (34, 36) in a first operating condition of the pump assembly (2) is held in a stable manner in each of its switch positions in each case by way of the hydraulic forces in the system, and switching energy which is stored previously by way of operation of the pump assembly (2) in the first operating condition, preferably in an energy store (44; 44'; 60) and/or in the hydraulic system, is used for switching over the switching device (34, 36) from a first into a second switch position in a second operating condition of the pump assembly (2).

20. A method according to claim 19, **characterised in that** a hydraulic inertia force of the fluid flowing in the system is utilised for switching over the switch-over device (34, 36).

## Revendications

1. Système hydraulique, qui est un système de chauffage, avec au moins un groupe motopompe (2) et un dispositif de commande (4) ayant au moins deux positions de commutation,
**caractérisé en ce que**
le dispositif de commande (34, 36) est conçu de façon que, lors d'un fonctionnement du groupe motopompe (2) dans un premier état de fonctionnement, il est maintenu stable dans chacune desdites au moins deux positions de commutation par les forces hydrauliques dans le système et que, dans un deuxième état de fonctionnement du groupe motopompe (2), le dispositif de commande (34, 36) est fait passer d'une première position de commutation à une deuxième position de commutation à l'aide d'énergie de commutation stockée pendant le premier état de fonctionnement, le système hydraulique étant configuré de façon que, dans le premier état de fonctionnement, l'énergie de commutation soit stockée indépendamment d'une commutation du dispositif de commande (34, 36) entre les positions de commutation.

2. Système hydraulique selon la revendication 1, **caractérisé en ce que** le système comprend au moins un moyen de stockage d'énergie (44 ; 44' ; 60) qui est configuré de façon que, pendant le fonctionnement du groupe motopompe (2) dans le premier état de fonctionnement, il est soumis à une pression hydraulique dans le système hydraulique et stocke de l'énergie de commutation dans un procédé de stockage, le dispositif de commande (4) restant dans son état de commutation actuel, et que le moyen de stockage d'énergie (44 ; 44' ; 60) est accouplé au dispositif de commande (34, 36) par transmission de force de façon que, dans le deuxième état de fonctionnement du groupe motopompe, le dispositif de commande (34, 36) soit fait passer dans une deuxième position de commutation par une force engendrée par le moyen de stockage d'énergie (44 ; 44' ; 60).

3. Système hydraulique selon la revendication 2, **caractérisé en ce que** le moyen de stockage d'énergie (44 ; 44' ; 60) est une partie du dispositif de commande et/ou qu'un fluide dans le système hydraulique, notamment un fluide en mouvement, remplit la fonction de moyen de stockage d'énergie.

4. Système hydraulique selon l'une des revendications précédentes, **caractérisé en ce que**, dans le premier état de fonctionnement, le groupe motopompe (2) est fait fonctionner à une vitesse de rotation supérieure à une vitesse de rotation limite et que, dans le deuxième état de fonctionnement, il est fait fonctionner à une vitesse de rotation inférieure ou égale à la vitesse de rotation limite ou est à l'arrêt.

5. Système hydraulique selon l'une des revendications précédentes, **caractérisé en ce que** le groupe motopompe (2) comprend un régulateur de vitesse de rotation pour varier la vitesse de rotation du groupe motopompe (2), le régulateur de vitesse de rotation comprenant un circuit de freinage qui freine le groupe motopompe activement lorsque la vitesse de rotation diminue.

6. Système hydraulique selon l'une des revendications 2 à 5, **caractérisé en ce que** le moyen de stockage d'énergie est configuré de façon que, pendant le fonctionnement du groupe motopompe (2) dans le premier état de fonctionnement, une pression hydraulique agisse à l'encontre d'une force engendrée par le moyen de stockage d'énergie et agissant sur le dispositif de commande, de façon telle qu'une action de commutation soit empêchée.

7. Système hydraulique selon l'une des revendications 2 à 6, **caractérisé en ce que** le moyen de stockage d'énergie est un dispositif accumulateur à ressort (44 ; 44' ; 60), un moyen magnétique, hydraulique ou pneumatique de stockage d'énergie.

8. Système hydraulique selon l'une des revendications 2 à 7, **caractérisé en ce que** le moyen de stockage d'énergie (44 ; 44' ; 60) comprend une surface de pression ou est relié à une surface de pression, qui est reliée à un trajet de flux dans le système hydraulique de façon telle que la surface de pression soit soumise à une pression de fluide engendrée par le groupe motopompe.

9. Système hydraulique selon l'une des revendications 2 à 8, **caractérisé en ce que** le moyen de stockage d'énergie (44 ; 44' ; 60) est relié au dispositif de commande (34, 36) par un élément d'atténuation (40) élastiquement déformable qui est configuré de façon telle qu'il se déforme pendant le procédé de chargement du moyen de stockage d'énergie (44 ; 44' ; 60) sans faire mouvoir le dispositif de commande (34, 36),
l'élément d'atténuation (40) étant disposé de préférence de façon telle que, pendant le fonctionnement du groupe motopompe (2) dans le premier état de fonctionnement, une pression hydraulique engendrée par le groupe motopompe (2) agisse sur l'élément d'atténuation (40), ladite pression agissant à l'encontre d'une force engendrée par le moyen de stockage d'énergie (44 ; 44' ; 60) et agissant sur l'élément d'atténuation (40) en déformant élastiquement l'élément d'atténuation (40).

10. Système hydraulique selon la revendication 9, **caractérisé en ce que** l'élément d'atténuation (40) présente des caractéristiques d'atténuation telles que, lors d'une réduction de la pression hydraulique, une recouvrance de forme de l'élément d'atténuation (40) est effectuée plus lentement qu'une décharge du moyen de stockage d'énergie (44; 44' ; 60).

11. Système hydraulique selon la revendication 9 ou 10, **caractérisé en ce que** l'élément d'atténuation (40) est configuré comme un volume variable en dimensions qui est adapté pour pouvoir être rempli et vidé d'un fluide via un point d'étranglement (42 ; 42'), le volume variable en dimensions étant relié de préférence, via le point d'étranglement (42; 42'), à un deuxième volume de compensation (58) variable en dimensions, pour former un système fermé.

12. Système hydraulique selon l'une des revendications 9 à 11, **caractérisé en ce que** l'élément d'atténuation (40) est pourvu d'un élément de rappel, notamment d'un ressort de rappel (44' ; 62), qui initie la recouvrance de forme.

13. Système hydraulique selon l'une des revendications 9 à 12, **caractérisé en ce qu'**un dispositif de contrôle (28) du groupe motopompe (2) est configuré de façon telle que, pour initier un procédé de commutation du dispositif de commande (34, 36), pour une pause de commutation, le dispositif de contrôle change le fonctionnement du groupe motopompe (2) du premier état de fonctionnement au deuxième état de fonctionnement, la pause de commutation étant plus courte qu'un lapse de temps nécessaire à un recouvrement de forme de l'élément d'atténuation (40).

14. Système hydraulique selon l'une des revendications précédentes, **caractérisé en ce que** le dispositif de commande (34, 36) est configuré comme un dispositif de commutation et notamment comme un dispositif de commutation pour commuter un trajet de flux entre au moins deux branches (16, 20) du système hydraulique.

15. Système hydraulique selon l'une des revendications précédentes, **caractérisé en ce que** le système hydraulique est un système à circuit et **en ce que** le groupe motopompe (2) est un groupe motopompe à pompe de recirculation.

16. Système hydraulique selon l'une des revendications précédentes, **caractérisé en ce qu'**il y a un dispositif de contrôle (28) qui est configuré pour changer le mode de fonctionnement du groupe motopompe (2) entre le premier et le deuxième état de fonctionnement pour initier un procédé de commutation du dispositif de commande (34, 36).

17. Système hydraulique selon l'une des revendications précédentes, **caractérisé en ce que** le dispositif de commande (34, 36) est configuré comme une vanne de commutation avec deux sièges de vanne (30, 32) et comprend deux corps de vanne (34, 36) associés reliés l'un à l'autre, qui sont disposés de façon telle que, lorsqu'un corps de vanne (34) est, de manière étanche, en appui sur son siège de vanne (30) associé, l'autre corps de vanne (36) est en même temps espacé de son siège de vanne (32) associé,
de préférence, la vanne de commutation étant disposé dans le système hydraulique de façon telle que, lorsque le groupe motopompe (2) fonctionne dans le premier état de fonctionnement, une pression hydraulique agisse sur celui des corps de vanne (34, 36) qui est en appui sur son siège de vanne (30, 32) de façon que le corps de vanne (34, 36) soit maintenu en appui sur le siège de vanne (30, 32).

18. Système hydraulique selon l'une des revendications précédentes, **caractérisé en ce que** le dispositif de commande (34, 36) est intégré dans un carter de pompe (64).

19. Procédé pour faire fonctionner un système hydraulique, qui est un système de chauffage, avec un groupe motopompe (2) et un dispositif de commande (34, 36) ayant au moins deux positions de commutation, **caractérisé en ce que**, lors d'un fonctionnement du groupe motopompe (2) dans un premier état de fonctionnement, le dispositif de commande (34, 36) est maintenu stable dans chacune de ses positions de commutation par les forces hydrauliques dans le système et que, pour faire passer le dispositif de commande (34, 36) d'une première position de commutation à une deuxième position de commutation, il est utilisé, dans un deuxième état de fonctionnement du groupe motopompe (2), de l'énergie de commutation préalablement stockée dans un moyen de stockage d'énergie (44 ; 44' ; 60) et/ou dans le système hydraulique par fonctionnement du groupe motopompe (2) dans le premier état de fonctionnement.

20. Procédé selon la revendication 19, **caractérisé en ce qu'**une force d'inertie hydraulique du fluide s'écoulant dans le système est utilisée pour commuter le dispositif de commutation (34, 36).
